# EUROPÄISCHE PATENTSCHRIFT

(11) **EP 3 797 024 B1**
(45) Veröffentlichungstag und Bekanntmachung des Hinweises auf die Patenterteilung: **26.03.2025**
(21) Anmeldenummer: 19715812.4
(22) Anmeldetag: 26.03.2019
(51) Int. Cl.: B29C 48/02, B29C 48/44, B29C 48/92, B29C 48/05, B29C 48/72, B29C 64/209, B33Y 30/00, B29C 48/40, B29C 48/30, B29B 7/42, B29B 7/48, B29C 64/118

(54) **3D-DRUCKVERFAHREN ZUR HERSTELLUNG VON RÄUMLICHEN KUNSTSTOFF-FORMTEILEN**
3D PRINTING PROCESS FOR PRODUCING THREE-DIMENSIONAL PLASTIC MOLDED PARTS
PROCÉDÉ D'IMPRESSION 3D POUR LA FABRICATION DE PIÈCES MOULÉES TRIDIMENSIONNELLES EN MATIÈRE SYNTHÉTIQUE

(30) Priorität: 23.05.2018 DE 102018004312; 01.06.2018 DE 102018004369; 23.06.2018 DE 102018005019; 31.01.2019 DE 102019000712
(43) Veröffentlichungstag der Anmeldung: 31.03.2021
(73) Patentinhaber: ENTEX RUST & MITSCHKE GMBH, 44805 Bochum (DE); NOVO-TECH GMBH & CO. KG, 06449 Aschersleben (DE)
(72) Erfinder: SASSE, Holger, 06449 Aschersleben (DE); HARALD, Rust, 44805 Bochum (DE); RUST, Harald, 44805 Bochum (DE)
(74) Vertreter: Kaewert, Klaus
(86) Internationale Anmeldenummer: PCT/EP2019/000095
(87) Internationale Veröffentlichungsnummer: WO 2019/223892

(56) Entgegenhaltungen:
- EP-A1- 3 081 364
- CN-U- 205 800 202
- DE-A1- 102016 213 439
- DE-U1- 29 522 255
- JP-A- 2016 215 581
- US-A1- 2005 015 175

## Beschreibung

3D ist die Abkürzung für dreidimensional.

Früher waren Drucker nur zu zweidimensionalen Werken geeignet.

Seit einiger Zeit können 3D-Drucker auch zu dreidimensionalen Werken genutzt werden. Dabei wird das Material entweder punktweise und/oder als Materialfäden/Streifen/Bänder aufgetragen. Die Materialfäden/Streifen/Bänder können kurz oder lang sein. In jedem Fall reihen sich die Materialpunkte und/oder Materialfäden so aneinander, dass ein gewünschtes Formteil entsteht.

Mit den 3D-Druckern können räumliche Formteile auch aus thermoplastischem Kunststoff hergestellt werden. Dazu ist es von Vorteil, den Kunststoff vor dem Auftragen in eine schmelzflüssige Form zu bringen. Der schmelzflüssige Kunststoff wird durch eine Düse an die Einsatzstelle gebracht. *Die Düse bildet den Druckkopf.* Die Einsatzstelle ist ein Punkt, an dem die Herstellung des Formteiles beginnen soll oder fortgesetzt werden soll. Im Koordinatensystem mit drei Achsen (X-Achse, Y-Achse und Z-Achse) wird der Punkt durch Werte auf allen Achsen bestimmt. Dabei bestehen unter anderem folgende Möglichkeiten:
- die Düse wird in senkrechter/vertikaler Stellung über einer fest stehenden Unterlage in einer horizontalen Ebene (durch X-Achse und Y-Achse bestimmt) bewegt. Dabei kann der Extruder zusammen mit der Düse bewegt werden.

Bei kleineren Extrudern ist diese Lösung die bessere Variante. Vorzugsweise ist der Extruder dann mitsamt der Düse in einem verfahrbaren/verschiebbaren Gehäuseteil gehalten, das seinerseits in einem verfahrbaren/verschiebbaren Gehäuseteil gehalten ist, wobei die Bewegungsrichtungen beider Gehäuseteile quer zueinander stehen, so dass jede Stellung in der Ebene erreichbar ist. Die Einstellung der Vorrichtung auf ein bestimmtes Bauprodukt bzw. die Umstellung auf ein anderes Bauprodukt kann mit der Steuerung der Vorrichtung bewirkt werden.

Bei größeren Bauwerksteilen wie Gebäudeteilen oder ganzen Gebäuden ist von Vorteil, wenn der Extruder mitbewegt wird. Dann ist für die Bewegung des Extruders eine Führung entlang der Gebäudewände vorgesehen, so dass große Bewegungen durch Bewegung des Extruders entlang der Wände erfolgen können. Darüber hinaus kann der Extruder auch schwenkbeweglich angeordnet sein, um Schmelzebänder nebeneinander verlegen zu können. Alternativ zur Schwenkbewegung des Extruders kann auch die Düse verstellt werden. Besonders geeignet sind dazu Schieber, mit denen die aus dem Extruder austretende Schmelze zur Seite der Wand gelenkt werden kann.
- die Unterlage wird unter einer fest stehenden, senkrechten/vertikalen Düse in eine horizontalen Ebene (durch X-Achse und Y-Achse bestimmt) bewegt
- die Düse ist in senkrechter/vertikaler Stellung über einer Unterlage in einer horizontalen Ebene (durch X-Achse und Y-Achse bestimmt) bewegbar. Gleichzeitig ist die Unterlage unter der Düse in einer horizontalen Ebene (durch X-Achse und Y-Achse bestimmt) bewegbar.
- die Düse wird in senkrechter/vertikaler Stellung zur Anpassung an die jeweilige Höhe des Punktes (auf der Z-Achse) senkrecht bewegt
- die Unterlage wird in senkrechter/vertikaler Stellung der Düse zu Anpassung an die jeweilige Höhe des Punktes (auf der Z-Achse) senkrecht bewegt
- sowohl die Düse, als auch die Unterlage sind zur Anpassung an die jeweilige Höhe des Punktes (auf der Z-Achse) senkrecht/vertikal bewegbar

Die Bewegungen werden vorzugsweise rechnergestützt ausgeführt.

Dabei ist es von Vorteil, die Daten aus einem rechnergestützten Zeichenprogramm, mit dem das Formteil konstruiert/abgebildet ist, zugleich für die Bewegung der Düse und/oder der Unterlage zu verwenden. *Das bekannteste Zeichen*/*Konstruktionsprogramm ist das CAD-Programm. Dieses Programm wie auch andere Zeichenprogramm können als Basis für die SoftWare-Entwicklung dienen.*

*Unabhängig davon gibt es Steuerungsprogramme, die unmittelbar oder mit geringen Änderungen zur Steuerung beim erfindungsgemäßen 3D-Drucken Anwendung finden können. Solche Steuerungsprogramm für die Bewegung des Druckkopfes*/*Düse können auch Steuerungsprogramme von anderen Maschinen, zum Beispiel von Fräsautomaten sein. Solche Steuerungen sind in der Lage mit einem Werkzeug feinste Schritte in alle Richtungen, sowohl auf einer geraden Linie als auch auf einer Kurvenbahn auszuführen. Dabei müssen nur die Daten eingegeben werden, mit der die Lage der Schmelzepunkte*/*Fäden*/*Bände*/*Streifen beschrieben werden.*

*Solche Steuerungen können auch in weiten Grenzen mit unterschiedlichster Geschwindigkeit arbeiten. Solche Steuerungen sind auch in der Lage eine Bewegung zu einem anderen Einsatzort im Schnellgang mit vielfacher höherer Geschwindigkeit als Arbeitsgeschwindigkeit zu überbrücken.*

Bei gleichmäßigen Formteilen ist ein gleichmäßiger Schmelzeaustritt aus der Düse möglich. Solche gleichmäßigen Formteile sind zum Beispiel rohrförmige Formteile. Rohrförmige Formteile *ähnliche gleichmäßige Formteile* werden jedoch extrem selten mittels eines 3D-Druckers hergestellt, weil alle üblichen Herstellungsvorgänge der Herstellung mittels 3D-Drucker wirtschaftlich weit überlegen sind.

Bei ungleichmäßigen Formteilen ist das anders.

Das heißt, je ungleichmäßiger ein Formteil ist, desto wirtschaftlicher kann die Herstellung mittels eines 3D-Drucker sein.

Im Sinne der Erfindung ist jedes Formteil ungleichmäßig, das einen veränderten Schmelzeaustritt erfordert. Das ist bei Dickenänderungen wie auch bei Ausbrüchen/Durchbrüchen in Wandungen der Fall, aber auch schon an Ecken. Während Dickenänderungen mit einer Änderung der Düsenbewegung/Unterlagenbewegung und/oder mit einer Änderung der Austrittsmenge aus der Düse pro Zeiteinheit Rechnung getragen werden kann, kann bei Ausbrüchen/Durchbrüchen eine Unterbrechung/Änderung des Schmelzflusses erforderlich werden.

*Schon die Herstellung von Produkten mit abweichenden Abmessungen kann den erfindungsgemäßen 3D-Druck wirtschaftlich machen.*

*Unabhängig davon kann schon vorteilhaft sein, zur Vermeidung von Vorratshaltung mit Hilfe des erfindungsgemäßen 3D-Druckers gewünschte Formteile nur auf Anforderung auszudrucken.*

Es ist bekannt, die Schmelze mit Hilfe einer Schmelzeinrichtung zu erzeugen, der im Prinzip aus der Klebertechnik bekannt ist. In der Klebertechnik wird ein Draht oder Stab aus Klebermaterial in eine Heizeinrichtung(Kleberpistole) geschoben und an der Spitze verflüssigt. Das verflüssigte Material wird mit dem Draht oder Stab aus der Heizeinrichtung geschoben. Mit dem Druck/Vorschub des Drahtes oder Stabes wird der Kleberaustrag bestimmt.

Bei der Anwendung dieser Technik für die Aufschmelzung eines thermoplastischen Kunststoffes ist anstelle des Drahtes oder Stabes aus Klebermaterial ein Draht oder Stab aus thermoplastischem Kunststoff vorgesehen.

Der Nachteil dieser Technik ist, dass größere Mengen plastischen Kunststoffes pro Zeiteinheit auf diesem Wege bislang nicht zur Verfügung stehen. Für eine Anwendung des 3D-Druckes für eine industrielle Herstellung von Formteilen ist das aber Voraussetzung.

Zwar sind Vorschläge zur Verwendung von Extrudern für die Aufschmelzung thermoplastischer Kunststoffe für den 3D-Drucker zum Beispiel aus den Druckschriften US 2005/015175 A1, CN 205 800 202 U, JP 2016 215581 A, EP 3 081 364 A1, DE 295 22 255 U1,

DE102016213439A1 und EP3020550B1 bekannt.

Bei der EP3020550B1 handelt sich jedoch um Einschneckenextruder, welche die Aufgabe haben den Kunststoff bis in einen Druckkopf zu fördern, in dem der Kunststoff durch Erwärmung geschmolzen werden soll. Es sind dabei drei Einschneckenextruder nebeneinander angeordnet, jeder der Einschneckenextruder ist für ein anderes Material, zum Beispiel ein andersfarbiges Material bestimmt. *Schon der Einsatz von zwei Extruder zum Materialwechsel kann schon grenzwertig sein, weil dann immer ein Extruder ungenutzt bleibt. Bei drei Extrudern erscheint eine Wirtschaftlichkeit ausgeschlossen.*

Die DE102016213439A1 lässt offen, wie der Kunststoff aufgeschmolzen wird. Es wird lediglich gefordert, dass der Kunststoff vor dem Austritt aus der Düse aufgeschmolzen wird.

Das Aufschmelzen im Druckkopf hat den Nachteil, dass im Falle einer Unterbrechung des Druckvorganges schmelzflüssiges Material im Druckkopf verbleibt. Dort bildet sich ein sogenannter Totraum, in dem die Gefahr einer sehr nachteiligen Veränderung des Kunststoffes besteht.

Der Erfindung liegt die Aufgabe zugrunde, die Handhabung der Schmelze beim 3D-Drucken mit einem Extruder zu verbessern.

Das wird mit den Merkmalen des Hauptanspruches erreicht. Die Unteransprüche beschreiben bevorzugte Ausführungsbeispiele der Erfindung.

Wichtig sind ein
- Verschluß, mit dem sich eine sichere und vorteilhafte Anpassung der Schmelzemenge an den jeweiligen Bedarf erreichen lässt
- ein Extruder mit einem Schmelzevolumen, das für den jeweiligen Bedarf ausreicht

Dabei ist nach der Erfindung wahlweise eine verschließbare Düse und/oder ein Extruder vorgesehen, dessen Schnecke/Spindel in axialer Richtung verstellbar ist und das Verstellorgan für einen Verschluß/Stopfen der Düse bildet, aus dem die Schmelze beim Drucken ausgetragen wird. Durch Bewegung der Schnecke/Stopfens kann die Düse ganz oder teilweise geöffnet oder ganz oder teilweise geschlossen werden.

Wahlweise bildet die Schnecke/Spindel eine Spitze, die zumindest in der Schließstellung in die Düsenöffnung ragt. Das kann sich als vorteilhaft erweisen, wenn das Formteil geringe Abmessungen und ein geringes Gewicht hat. Dann fällt die damit bei senkrechter/vertikaler Stellung der Schnecke/Spindel verbundene Einschränkung der horizontalen Bewegungsfreiheit bei horizontaler Bewegungsfreiheit der Unterlage nicht ins Gewicht.

Es gibt aber auch größere Formteile, deren Abmessungen und deren Gewicht eine Bewegung des Formteiles und einer das Formteil tragenden Unterlage/Werktisch einige Schwierigkeiten bereiten. Bei der Anwendung des erfindungsgemäßen Druckens auf Baukörper/Gebäude ist eine Bewegung des Formteiles Baukörper/Gebäude praktisch ausgeschlossen. Dann wird die gesamte Anlage mit dem Extruder bewegt.

Bei einer in die Düse ragenden Schnecke/Spindel hat die Düsenöffnung oder die Spitze der Schnecke/Spindel eine sich in Strömungsrichtung der Schmelze verjüngende Form.

Die Schneckenspitze/Spindelspitze kann eine Keilform besitzen. Dann ist die Düse/Düsenöffnung dem angepasst.

Vorzugsweise haben die Düsenöffnung und die Schneckenspitze/Spindelspitze eine konische Form.

Die Schneckenspitze/Spindelspitze kann auch eine Kugelform bzw. eine andere, insbesondere ballige Rundform aufweisen. Mit solcher Spitze kann eine sich verjüngende Düse wie auch eine Düse mit zylindrischer Öffnung kombiniert werden.

Mit der sich in Schmelzströmungsrichtung verjüngenden Öffnung der Düse kann korrespondieren
- eine Schneckenspitze/Spindelspitze, die sich in gleicher Weise verjüngt wie die Düsenöffnung, und sich mit einer axialen Bewegung der Schnecke/Spindel in die Düse hineinbewegt und die Düse teilweise oder ganz verschließt bzw. sich mit einer axialen Bewegung der Schnecke/Spindel aus der Düse herausbewegt und die Düse ganz oder teilweise öffnet.

Je nach Durchmesser der Schneckenspitze/Spindelspitze kann die Schneckenspitze/Spindelspitze in der Schließstellung
--bis über die Düsenspitze hinausragen. Dann ist die Schneckenspitze/Spindelspitze im Durchmesser kleiner als die Düsenöffnung an dem Ende, welches in Strömungsrichtung der Schmelze weist.
-- oder mit der Düsenspitze abschließen. Dann ist die Schneckenspitze/Spindelspitze im Durchmesser gleich dem Durchmesser der Düsenöffnung an dem Ende, welches in Strömungsrichtung der Schmelze weist.
--vor der Düsenspitze enden. Dann ist die Schneckenspitze/Spindelspitze im Durchmesser größer als die Düsenöffnung an dem Ende, welches in Strömungsrichtung der Schmelze weist,

In jeder Schließstellung verlaufen die Mantelflächen der Schneckenspitze/Spindelspitze parallel zur Mantelfläche der Düsenöffnung.
- eine Schneckenspitze/Spindelspitze, die sich anders verjüngt als die Düsenöffnung. Dabei kann die Schneckenspitze/Spindelspitze bei Keilform oder konischer Form zur Schneckenachse/Spindelachse eine geringere Neigung oder eine größere Neigung als die Düsenöffnung aufweisen. Bei geringerer Neigung der Schneckenspitze/Spindelspitze kommt es in Abhängigkeit von dem Durchmesser der Schneckenspitze/Spindelspitze zur Berührung einer Kante des Schneckenspitze/Spindelspitze mit der Mantelfläche der Düsenöffnung oder zur Berührung einer Kante der Düsenöffnung mit der Mantelfläche der Schneckenspitze/Spindelspitze.
- Bei der Kugelform oder anders runden Form der Schneckenspitze/Spindelspitze kommt es bei konischer Form der Düsenöffnung in Abhängigkeit von dem Durchmesser der Schneckenspitze/Spindelspitze
   --zu einer Berührung der Schneckenspitze/Spindelspitze mit der Mantelfläche der Düsenöffnung oder
   --zu einer Berührung der Kante der Düsenöffnung mit der Mantelfläche der Schneckenspitze/Spindelspitze.

Die erfindungsgemäße Bewegung der Schnecke/Spindel wird wahlweise dadurch verwirklicht, daß die Schnecke/Spindel in axialer Richtung verschiebbar in dem zugehörigen Extrudergehäuse angeordnet ist. Für die axiale Verschiebung sind verschiedene Antriebe möglich, sowohl hydraulische als auch mechanische. Die hydraulischen Antriebe besitzen einen in axialer Richtung auf die Schnecke/Spindel wirkenden, hydraulischen Zylinder/Kraftkolben mit einer Wegsteuerung/Schrittsteuerung. Mit einer elektronischen Wegmessung lassen sich auch kleine Wege/Verstellungen messen und steuern.

Es können auch elektrische Hubeinrichtungen als Antrieb für die axiale Bewegung der Schnecke/Spindel eingesetzt werden. *Elektrische Hubeinrichtungen*/*Kraftkolben sind besonders für schnelle und häufige Schließ- und Öffnungsbewegungen geeignet. Das heißt, für kurze Fäden*/*Bänder*/*Streifen und dementsprechend kurze Schmelze-Strömungsintervalle sind elektrische Hubeinrichtungen*/*Kraftkolben besonders geeignet. Das gilt noch mehr für Extreme wie Schmelzepunkte.*

Auch bei der axial verschiebbaren Anordnung lässt sich die Schnecke/Spindel an dem Ende, welches der Düse abgewandt ist, über einen Motor und ein Getriebe in Drehbewegung bringen. Dazu kann zum Beispiel ein Antriebsrad mit einer Vielkeilverbindung auf der Schnecke/Spindel sitzen. Die Vielkeilverbindung erlaubt eine Verschiebung der Schnecke/Spindel bei einem in axialer Richtung mit notwendigem Spiel für eine Drehbewegung gehaltenen Antriebsrad.

Eine kostengünstige Antriebsverbindung zwischen der Schnecke/Spindel und dem Antrieb sieht einen Riementrieb mit einem oder mehreren Keilriemen vor. Der Keilriemen erlaubt eine feste Anordnung des Antriebsrades auf der Schnecke/Spindel bei gleichzeitiger erfindungsgemäßer Verschiebung. Das gilt insbesondere für geringe Verschiebungen. Die Verschiebungen können auch bei erheblicher Höhe der herzustellenden Formteile durch Verstellung der Unterlage gering gehalten werden.

Wahlweise ist anstelle oder zusätzlich zu der axialen Verstellbarkeit der Schnecke/Spindel eine axiale Verstellbarkeit der Düse vorgesehen, um die Düse teilweise oder ganz zu öffnen oder zu schließen. Dabei wird die Düse entweder gegen die Schneckenspitze/Spindelspitze bewegt oder von der Schneckenspitze/Spindelspitze wegbewegt. Als Bewegungsantrieb für die axiale Bewegung der Düse eignen sich die gleichen Antriebe und Steuerungen wie für die axiale Bewegung der Schnecke/Spindel.

Wahlweise kann als Verschluß auch ein Schieber Anwendung finden.

Die vorstehend beschriebenen Düsen sind besonders vorteilhaft für eine Anlage mit senkrecht/vertikal bewegter Düse bzw. senkrecht/vertikal bewegter Schnecke/Spindel und sowohl senkrecht bewegter als auch horizontal bewegter Unterlage/Werktisch. *Die senkrechte*/*vertikale Anordnung erlaubt es, die Schmelze nach unten abzulegen. Das geht besonders gut. Außerdem hat die Schmelze keine nennenswerte Neigung, aus der Ablagestellung wegzufließen.*

Darüber hinaus können die vorstehend beschriebenen Düsen auch verwendet werden, wenn die Düsen mitsamt dem die Düsen mit Schmelze speisenden Extruder in der Horizontalen bewegbar sind.

Beim 3D-Drucken eines Baukörpers/Gebäudes wie auch anderen Formteilen mit großen Gewicht und großen Abmessungen kann die Bewegung der Anlage große Vorteile aufweisen.

Der Begriff Baukörper schließt nach der Erfindung große Baukörper, die einen wesentlichen Teil des Gebäudes ausmachen, wie auch kleine Baukörper mit der Größe einer Platte oder sogar mit der Größe eines Ziegelsteines oder sonstigen Steines ein, wie er zum Hausbau verwendet wird.

Bei der Herstellung von Baukörpern/Gebäuden ist es möglich, ohne Fugen zu bauen oder die Zahl der Fugen auf eine Anzahl notwendiger Dehnungsfugen zu beschränken. Vorteilhafterweise lassen sich die Dehnungsfugen zugleich so gestalten, daß sich Fugenbänder nachträglich leicht montieren lassen. Bei klebbaren Fugenbändern ist eine einfache Vertiefung/Nut mit einer Klebefläche im Grund der Vertiefung/Nut ausreichend. An herkömmlichen Baukörpern werden für Fugenbänder entsprechende Vertiefungen/Nuten in die Baukörper eingeformt, soweit nicht bereits ein Einbetonieren der Fugenbänder vorgesehen ist. Die Vertiefungen/Nuten lassen sich bei den erfindungsgemäßen Baukörpern/Gebäuden auch einarbeiten. Vorzugsweise geschieht das nicht nachträglich, sondern bereits bei der Herstellung durch 3D-Drucken.

Besondere Vorteile entstehen, wenn die Fugenbänder mit dem erfindungsgemäß hergestellten Baukörper/Gebäude verschweißbar sind. Dazu müssen die Fugenbänder und der Baukörper/Gebäude mindestens an der Schweißfläche aus verschweißbarem Material bestehen. Wahlweise besteht der Baukörper dazu insgesamt oder teilweise aus einem mit dem Fugenband verschweißbaren Material oder es ist ein Profil in den Baukörper bei dessen Herstellung eingeformt oder auf den Baukörper aufkaschiert, das mit dem Fugenband verschweißbar ist.

Zum Verschweißen müssen das Fugenband und der Baukörper/Gebäude nicht insgesamt aus dem gleichen Kunststoff bestehen. Es ist ausreichend, wenn das Fugenband und/oder der Baukörper/Gebäude aus einer Kunststoffmischung mit einem Kunststoffanteil besteht, der die Verschweißbarkeit herstellt. Für die Verschweißbarkeit kann in Abhängigkeit vom Material schon ein Anteil von weniger als 40Gew%, vorzugsweise weniger als 30Gew%, noch weiter bevorzugt weniger als 20Gew% und höchst bevorzugt weniger als 10Gew% verschweißbaren Materials an dem Fugenband ausreichen. Die Gew% beziehen sich auf die gesamte Kunststoffmischung für den Baukörper/Gebäude und das Fugenband.

Die Verschweißbarkeit kann die Kosten wesentlich verringern. Dazu können wesentliche Einsparungen bei der Montage gehören. Darüber hinaus ist dort ein überaus großer Vorteil gegeben, wo es auf die Abdichtung ankommt. Mit der Verschweißung wird eine Abdichtung gegenüber anderen Verbindungstechniken deutlich besser. Die Dichtwirkung wird besser. Wo es auf die Abdichtung ankommt, können zugleich im Abstand nebeneinander Schweißnähte gelegt werden, wobei der Zwischenraum zwischen den Schweißnähten mit Druckluft zur Prüfung der Schweißnähte beaufschlagbar ist.

Die erfindungsgemäße Schweißverbindung kann auch auf andere Bauprodukte als Fugenbänder Anwendung finden, auch unabhängig von dem erfindungsgemäßen 3D-Drucken.

Ein solcher Anwendungsbereich wird durch Kunststoff-Fenster gebildet. Kunststoff-Fenster besitzen in der Regel einen Kunststoffrahmen, während die Scheibe aus Glas besteht. Die Kunststoffrahmen bestehen häufig aus PVC (Polyvinylchlorid) oder Mischungen mit PVC. Die Kunststoffrahmen bestehen dabei aus komplizierten Profilen, die verschiedene Funktionen erfüllen müssen. Die Anbindung an das Gebäude ist nur eine Funktion davon. In Anwendung der erfindungsgemäßen Schweißtechnik können die Fenster unmittelbar an dem Baukörper/Gebäude verschweißt werden, wenn obige Voraussetzungen gegeben sind. Sofern der Baukörper/Gebäude diese Voraussetzung nicht erfüllt, können einfache Kunststoffprofile an den Baukörpern/Gebäuden befestigt bzw. eingeformt werden, die sich mit den Kunststoff-Fenstern verschweißen lassen. Zum Verschweißen kann ein einfacher Schenkel am äußeren Rand der Kunststoff-Fenster ausreichend sein.

Der einfache Schenkel an dem Kunststoff-Fenster kann zum Beispiel außen oder innen flach auf dem Baukörper/Gebäude verschweißt werden, wenn der Schenkel des Kunststoff-Fensters bei dessen Montage flach auf der Außenfläche oder flach auf der Innenfläche des Baukörpers/Gebäudewand zu liegen kommt. Das ist der Fall, wenn der Schenkel zum Beispiel parallel zur Frontfläche des Fensters verläuft. Zu einer Montage des Fensters innerhalb der Fensteröffnung kann zum Beispiel ein rahmenartiges Zwischenstück aus einem Z-förmigen Profil hilfreich sein. Das Profil ist dann mit einem Schenkel außen oder innen am Baukörper verschweißt und mit dem anderen Schenkel mit dem Fensterrahmen verschweißt.

Das Verschweißen kann thermisch erfolgen, indem die Schweißflächen angeschmolzen und anschließend gegeneinander gedrückt werden.

Das Verschweißen kann auch kalt, durch Quellschweißen erfolgen. Dazu werden die Schweißflächen mit einem Lösungsmittel bestrichen und nach Aufquellen gegeneinander gedrückt. Das Quellschweißen ist auch für Hart-PVC geeignet, das vorwiegend für den Fensterbau verwendet wird. Als geeignetes Lösungsmittel ist Tetrahydrofuran bekannt.

Wo das Verschweißen nicht gewünscht ist, kann einer Verklebung des Fensterrahmens mit einem geeigneten Kleber am Baukörper/Gebäude erfolgen. Geeignete Kleber sind zum Beispiel Zwei-Komponenten-Kleber. Diese Kleber bieten hohe Klebewirkung und eine lange Lebensdauer.

An Durchdringen der Baukörper/Gebäude für Leitungen (Wasser/Abwasser; Strom; Gas; Lüftungen usw.) können Einbauten wie zum Beispiel Flansche vorkommen, die in gleicher Weise wie die Fenster verschweißt/verklebt werden können

Bei einer Bewegung der Anlage ist es hilfreich, wenn die Düse nicht nur eine Auf/Zu-Funktion hat und die Schmelze nicht nur auf einer Linie ablegen kann, sondern die Schmelze auch gleichzeitig auf einer Fläche verteilen kann, die breiter ist als zum Beispiel ein Schmelzefaden/Streifen/Band oder ein Schmelzepunkt. Das ist zum Beispiel der Fall wenn ein 3D-Drucker eine Wand in einem Arbeitsgang errichten soll. Dann soll der 3D-Drucker die Schmelze über die gesamte Wandbreite ablegen. Das kann in Punkten oder mit Fäden oder Bändern/Fäden/Streifen geschehen.

Die Herstellung von Wänden kann auch unter Bildung geschlossener Schichten oder unter Bildung von Hohlräumen geschehen. Besondere Vorteile bei der Hohlraumbildung ergeben sich, wenn die geschlossenen Außenschichten der Wände durch Stege miteinander verbunden werden und wenn die Stege unterschiedlich schräg zwischen den Schichten verlaufen. Zum Beispiel können die einen Stege unter 45Grad-Neigung in einer Längsrichtung der Wände und die anderen Stege unter 45Grad-Neigung in der entgegen gesetzten Längsrichtung der Wände verlaufen. Wahlweise können sich die Stege dabei kreuzen. Das bewirkt eine steife Verbindung und erlaubt bei Bedarf eine Durchlüftung der Wände; gegebenenfalls können die Hohlräume auch zur Leitungsführung für einzelne oder alle in einem Gebäude vorkommenden Medien genutzt werden.

Wahlweise erfolgt die Hohlraumbildung unter Bildung einheitlich dicker Schichten. Die Hohlräume können jeweils abgeschlossen sein. Das ist auch unter Ausbildung wasserdichter Hohlräume möglich. Dies ist im erdberührten Bereich von Gebäudewänden von Vorteil. Die Hohlräume lassen sich beliebig gestalten. Von Vorteil sind Hohlräume mit besonderer statischer Festigkeit und besonders vorteilhaftem Verformungsverhalten unter Last. Geeignete Hohlräume sind zum Beispiel geschlossenen Bienenwaben nachgestaltet. Die geschlossenen Hohlräume bieten auch eine vorteilhafte Wärmedämmung.

Wahlweise sind die Hohlräume auch mindestens teilweise miteinander verbunden. Vorteilhafterweise kann das genutzt werden, um in der Senkrechten/Vertikalen eine Verbindung zwischen den Hohlräumen zu schaffen, daß Feuchtigkeit, die auf dem Wege der Diffusion eindringt nach oben abdampfen kann.

Die Verwirklichung obiger Konstruktionen kann mit der Verlegung von Schmelzebändern und/oder Schmelzefäden und/oder Schmelzestränge und/oder Schmelzepunkten erfolgen. Schmelzebänder/Fäden/Stränge erleichtern das Drucken, indem ein längerer Schmelzefluß in Form von Schmelzefäden/Stränge/Bänder möglich ist. Schmelzefäden beinhalten einen dünnen Schmelzeauftrag. Schmelzbänder/Stränge besitzen ein Vielfaches der Breite von Schmelzefäden. Sie können die gleiche Dicke wie Schmelzefäden, aber auch ein Vielfaches der Dicke von Schmelzefäden besitzen. Die größere Dicke ist von Vorteil, wo mit größerer Auftragsleistung gearbeitet werden. Auch bei Schmelzebändern/Fäden/Strängen muß eine Unterbrechung der Bänder/Fäden/Fäden berücksichtigt werden. Dagegen wird der Schmelzefluß bei punktweiser Schmelzeverlegung extrem oft unterbrochen. *Für die punktweise Schmelzeverlegung sind elektrische betriebene Hubeinrichtungen besonders geeignet.*

Während bei zweidimensionalen Druckwerken mit dem Druckmaterial nur eine einzige Schicht/Lage erstellt wird, werden bei dreidimensionalen Druckwerken mehrere Schichten/Lagen übereinander verlegt.

Üblicherweise wird in jeder Lage/Schicht zeilenweise vorgegangen. Die zeilenweise Arbeitsweise hat den Nachteil erheblicher Leerbewegungen des Druckers und/oder erheblicher Leerbewegungen des Formteiles. Nach der Erfindung kommt es zu einer wesentlichen Steigerung der Druckleistung, wenn sich das zeilenweise Drucken auf Bodenflächen der Formteile beschränkt, d.h. umgesteuert wird, wenn eine Kante der Bodenfläche erreicht ist.

Vorteilhafterweise muss
keine Unterbrechung der Verlegung stattfinden, wenn beim Umsteuern in die benachbarte Zeile übergegangen wird. Der Druck nimmt dann einen mäandernden Verlauf.

Wenn nach Fertigstellung einer Bodenfläche die Wandflächen wie eine Bodenflächen behandelt werden, häufen sich die Umsteuerungsvorgänge. Vorzugsweise wird bei Wandflächen auf eine Bewegungsrichtung entlang der Wandflächen übergegangen. Die neue Bewegungsrichtung kann so programmiert werden. Hilfsweise kann bei Formteilen der Werktisch, auf dem die Formteile aufgebaut werden, gedreht werden, bis die Bewegungsrichtung des Druckers in Richtung einer Wand verläuft. Anstelle der Drehung des Werktisches oder zusätzlich kann eine Drehung des Extruders mit der Düse und mit sonstigem Zubehör die Ausrichtung der Druckerbewegung auf den Verlauf der zu druckenden Wand erleichtern. Schon die Drehbeweglichkeit von Einzelteilen wie der Düse kann für eine Ausrichtung der Bewegungsrichtung der Düse auf eine Wand hilfreich sein.

Bei der Herstellung von Baukörpern/Gebäuden ist von Vorteil, wenn der Extruder mitsamt der Düse und sonstigem Zubehör für das Drucken über dem Baukörper/Gebäude in jeder Richtung verfahrbar ist.

Zum Verfahren kann jeder Baukörper/Gebäude mit Fahrwegen für die erfindungsgemäße Anlage eingerichtet werden. Die Fahrwege und/oder der Extruder mit der Düse können zugleich höhenverstellbar sein. Die Software für die Steuerung sollte darauf eingerichtet sein, bei Eingabe der Maße der Fahrwege und deren Lage zueinander und deren Höhe alle Schmelzebänder/Faden/Stränge in gewünschter Länge an gewünschter Stelle abzulegen.

In Betracht kommt auch eine Lasersteuerung der Anlage. Dabei werden vorzugsweise mehrere Laser eingesetzt, die den Extruder mit der Düse an jede gewünschte Stelle lenken.

Bei großen Baukörpern ist es zweckmäßig, die Baukörper /Gebäude abschnittsweise herzustellen.

Nachfolgend sind einige von verschiedenen möglichen Verfahrensweisen mit kurzen und längeren Schmelzebändern dargestellt:
- der Drucker kann in Längsrichtung der Wand ein langes Schmelzeband/Faden/Strang legen. Das nächste lange Schmelzeband wird auch in Längsrichtung der Wand, aber zugleich um Einiges versetzt, neben das vorher gelegte Schmelzeband/Faden/Strang gelegt
   -- die längeren Schmelzebänder/Faden/Stränge können dabei schließend nebeneinander liegen
   --die längeren Schmelzebänder/Faden/Stränge können dabei einander seitlich überlappend verlegt werden
   --die längeren Schmelzebänder/Faden/Stränge können unter Bildung eines horizontalen Abstandes voneinander verlegt werden
      ---in Abständen erfolgt eine Verbindung beider beabstandeter längerer Schmelzebänder/Faden/Stränge durch kurze Schmelzebänder/Faden/Stränge

Durch wechselnde Anordnung von langen und kurzen Schmelzesträngen/Faden/Bänder und/oder Versatz der Schmelzestränge/Faden/B änder wird schon in jeder Lage/Schicht von Schmelzesträngen/Faden/Bändern eine Verband/Verbund erzeugt. Dadurch, dass auch in jeder neuen Lage/Schicht ein Versatz der Schmelzestränge/Faden/Bänder gegenüber den Schmelzesträngen/Faden/Bänder in der vorhergehend gelegten Lage/Schicht herbeigeführt wird, wird der Verband/Verbund der Schmelzestränge/Faden/Bänder noch verbessert.

Eine weitere Verbesserung kann erzielt werden, wenn alternierend (von Lage/Schicht zu Lage/Schicht) ganz oder teilweise schmalere oder breitere Schmelzebänder/Faden/Stränge gelegt werden. Die breiteren Schmelzebänder/Faden/Stränge können zum Beispiel doppel so breit wie die schmaleren Schmelzbänder/Faden/Stränge sein. Wahlweise liegt das Verhältnis der schmaleren Breiten zu den größeren Breiten zwischen 1 zu 1,1 bzw. bis zu 1 zu 4.
- an Kreuzungsstellen/Stoßstellen von Schmelzebändern/Faden/Strängen wird vermieden, daß Schmelzebänder/Faden/Stränge in einer Schicht/Lage übereinander gelegt werden.

Bei zwei übereinander liegenden Schichten/Lagen versteht sich, daß Schmelzebänder/Faden/Stränge übereinander liegen.

Vorzugsweise wird in jeder Schicht/Lage eine gleichbleibende Dicke eingehalten. Nach der Erfindung wird das erreicht, indem längere Schmelzebänder/Fadenn/Stränge(beispielhaft Schmelzeband 1 genannt) vor einem anderen Schmelzeband/Faden/Stränge (beispielhaft Schmelzeband 2 genannt) enden und nach dem anderen Schmelzeband 2 wieder neu anfangen. Das Schmelzeband 1 wird dadurch vom Schmelzeband 2 unterbrochen.

An jeder Kreuzungsstelle/Stoßstelle genau gleich vorzugehen beinhaltet gegenüber anderen Vorgehensweisen die weniger gute Lösung.

Besser ist, an allen Kreuzungsstellen/Stoßstellen einen Verband herzustellen. Verband heißt, die aneinander stoßenden Bauteile werden miteinander verbunden, in Schmelzebänder/Faden/Stränge des einen Bauteiles zwischen Schmelzebändern/Faden/Stränge des anderen Bauteiles eingebunden werden. Ein erfindungsgemäßer Verband entsteht bei sich kreuzenden Schmelzebändern/Faden/Strängen, wenn in der nächsten Schmelzeschicht/Lage das Schmelzeband 2 vor dem Schmelzeband 1 endet und nach dem Schmelzeband 1 wieder neu angesetzt wird. Dadurch läuft das Schmelzeband 1 an dieser Kreuzungsstelle durch, während das Schmelzeband 2 unterbrochen wird.
- vorzugsweise werden Stoßstellen entsprechend ausgelegt. Mit Stoßstellen sind dabei die Stellen gemeint,
   - an denen zwei Wände T-förmig oder L-förmig aneinander stoßen oder
   - an denen eine Wand
      --an eine Bodenfläche des Formteiles
      --an einen Zwischenboden
      --an einen Deckel
      --an einen Vorsprung des Bauteiles
      --oder dergleichen stößt.

Auch an den T-förmigen Stoßstelle ist ein Verband/Verbund von Vorteil.

Das T-förmige Aneinanderstoßen unterscheidet sich von den Kreuzungsstellen dadurch, daß die an eine durchgehende Wand anstoßende Wand sich nicht an der gegenüber liegenden Seite der durchgehenden Wand fortsetzt. Vorzugsweise bleibt das oben am Schmelzeband 1 und Schmelzeband 2 erläuterte Prinzip erhalten, In der einen Lage/Schicht ist das Schmelzeband 1 durchgehend verlegt und stößt das Schmelzeband 2 an das durchgehend verlegte Schmelzeband 1. In einer darüber liegenden Lage/Schicht ist das Schmelzeband 1 in der Breite des Schmelzebandes 2 unterbrochen und erstreckt sich das Schmelzeband 2 in diese Lücke.

Stoßstellen können sich nach der Erfindung auch ergeben, wenn die eine Ecke bilden. Dann stoßen die Wände L-förmig aneinander. Diese Stoßstelle unterscheidet sich von der T-förmigen Stoßstelle dadurch, daß keine Wand durchgehen ist (über die Ecke hinausgeht). Dann endet das Schmelzeband 1 in einer Lage/Schicht vor der Ecke in einem Abstand, der gleich der Breite des Schmelzebandes 2 ist, so daß das Schmelzeband 2 in die Lücke geführt/gelegt werden kann. In der darüber liegenden Lage/Schicht endet das Schmelzeband 2 in einem Abstand von der Ecke, der gleich der Breite des Schmelzebandes 1 ist, so daß das Schmelzeband 1 in die Lücke geführt/gelegt werden kann.

Alternativ zu der vorstehenden Eckenbildung kann das Schmelzeband/Faden/Strang auch an der Ecke abgewinkelt werden. Dabei wird das Schmelzeband/Faden/Strang ohne Unterbrechung an der Ecke abgewinkelt und weitergeführt. Im Prinzip kann das mit jedem Schmelzeband/Schmelzestrang/Faden durchgeführt werden. Die besten Ergebnisse zeigen sich mit Schmelzebändern/Faden/Stränge aus einer Düse mit kreisförmigem Querschnitt.

Der Anschluß einer Wand an eine Bodenfläche oder dergleichen wird vorzugsweise in gleicher Weise gelöst wie der T-förmige Stoß, denn in die Bodenfläche wird auch aus verschiedenen Schmelzebändern/Faden/Stränge zusammengesetzt. Das heißt, an der wandseitigen Kante des herzustellenden Bodens werden Schmelzebänder/Faden/Stränge genau so abgelegt wie zur Herstellung einer durchgehenden Wand, an die eine andere Wand anstößt.

In der einen Lage/Schicht wird ein zu verlegendes Schmelzeband/Faden/Strang des Bodens auf einer Länge unterbrochen, die gleich der Breite des Schmelzebandes/Faden/Stranges einer anstoßenden Wand ist, so daß dieses Schmelzeband bis in diese Lücke geführt werden kann.

In der darüber vorgesehenen Lage/Schicht wird das betreffende Schmelzeband/Faden/Strang des Bodens ohne Unterbrechung verlegt und stößt das zugehörige Schmelzeband/Faden/Strang der anstoßenden Wand gegen das zum Boden gehörige Schmelzeband/Faden/Strang.
- *soweit eine Gebäudewand lageweise*/*schichtweise aufgebaut wird, können mehrere Schmelzebänder*/*Faden*/*Stränge in einer Ebene nebeneinander und*/*oder hintereinander liegen. Vorzugsweise ist dann ein Versatz zwischen den Schmelzebändern*/*Faden*/*Stränge einer Schicht*/*Ebene und den Schmelzebändern*/*Faden*/*Stränge einer darüber liegenden Schicht*/*Ebene bzw. einer darunter liegenden Schicht*/*Ebene vorgesehen. Der Versatz beträgt mindestens 1mm, vorzugsweise mindestens 2mm, noch weiter bevorzugt mindestens 3mm und höchst bevorzugt mindestens 4mm. Das führt vorteilhafterweise zu einer Verzahnung der verschiedenen Lagen.*

Bei der Verlegung von Schmelzfäden müssen viel mehr Schmelzefäden verlegt als bei Schmelzbändern, um das gleiche Volumen an Wänden und Flächen herzustellen.

Der Extruder kann ein Doppelschneckenextruder sein.

Vorzugsweise findet als Extruder ein Einschneckenextruder, noch weiter bevorzugt ein Planetwalzenextruder Anwendung. Alle genannten Extruderarten besitzen einen Füllteil, in den der zum Druck vorgesehene Kunststoff eingefüllt wird. An den Füllteil schließt sich ein Extruderteil an, in dem der Kunststoff aufgeschmolzen, homogenisiert und auf die zum Drucken erforderliche Temperatur gebracht und gehalten wird. Soweit erforderlich kann dabei auch eine Entgasung stattfinden wie auch eine Mischung mit Additiven, Zuschlägen und Füllstoffen erfolgen. Wahlweise findet auch ein Compound Anwendung, das eine Vormischung des Kunststoffes mit einzelnen oder mehreren oder allen Additiven, Zuschlägen und Füllstoffen enthält.

Bei der Herstellung von Bauprodukten können besonders große Mengen Füllstoffe Anwendung finden. Die Füllstoffe am Bau sind in der Regel mineralischer Herkunft. Zunehmend finden jedoch auch Füllstoffe organischer Herkunft Anwendung. Ein Beispiel sind feine Holzpartikel, die in den Kunststoff eingemischt werden.

Je mehr Füllstoffe eingemischt werden, desto mehr wird der Kunststoff zum Bindemittel. Dabei besteht ein Interesse, die Festigkeit des Kunststoffgerüstes zu verbessern. Das geschieht insbesondere mit Naturfaden.

Die Mischung von Kunststoff mit Holzpartikeln hat eine eigene Produktbezeichnung WPC. Dabei ist der Anteil von Holz regelmäßig höher als 50Gew%, bezogen auf die Mischung. Es können beim WPC auch Anteile von Holz von 60Gew% oder 70Gew% erreicht werden.

Außerdem müssen Bauprodukte Flammschutzmittel enthalten, wenn sie einer Brandlast ausgesetzt sein können, Die gängigen Brandschutzmittel sind bekannt. Zu den gängigen Brandschutzmittel gehört Aluminiumhydroxid. Je größer der Anteil an entflammbaren/brennbaren Bestandteilen in dem Bauprodukt ist, desto größer ist der Anteil der Flammschutzmittel. Bei einem hohen Anteil an Holzpartikeln und Kunststoff von mehr als 70 bis 90Gew% kann der Anteil an Flammschutzmittel 10 bis 30Gew% betragen. *Eines der in Betracht kommenden Flammschutzmittel ist Aluminiumhydroxid.*

*Zu den Anteilen des Einsatzmateriales gehören zumeist auch Farbstoffe.*

Die Gew% beziehen sich auf das gesamte Bauprodukt.

Das Aufschmelzen des Kunststoffes erfolgt durch entsprechende Erwärmung. Die Erwärmung kann durch Beheizung des Extruders erfolgen. Die Beheizung ist möglich, weil herkömmliche Extruder mit einer Temperierung versehen sind. Dazu sind die Gehäuse der Extruder mit Kanälen für ein Temperierungsmittel versehen. Das Temperierungsmittel ist Wasser oder Öl. Zum Beheizen wird erwärmtes Temperierungsmittel in das Gehäuse geleitet. Dort gibt das Temperierungsmittel seine Wärme teilweise an den Kunststoff ab. Zugleich erwärmt sich der eingefüllte Kunststoff durch seine ständige Verformung im Extruder. Dabei wird die Antriebsenergie des Extruders in Wärme umgewandelt. Nach Erreichen der Schmelztemperatur führen die weitere Verformung des Kunststoffes und der zugehörige Energieeintrag zu einer weiteren Erwärmung, wenn dem nicht durch Kühlung entgegen gewirkt wird. Dann dient das Temperierungsmittel zur Kühlung. Zur Aufnahme der Wärme wird kaltes Temperierungsmittel in die Kanäle des Gehäuses geleitet. Vorzugsweise werden zur Beheizung und zur Kühlung getrennte Temperierungsmittel-Kreise eingesetzt.

Bei modulweise aufgebauten Extrudern (die Schnecke/Spindel erstreckt sich vom Antrieb durch alle Module bis zur Duse) geschieht das durch den Einsatz separater Extrudermodule für die Beheizung und für die Kühlung. Wahlweise findet auch für eine gewünschte Entgasung ein separater Extruder-Modul Verwendung. Nachfolgend ist dieser Modul als Entgasungsmodul bezeichnet. Der Entgasungsmodul besitzt eine Mantelöffnung, durch die Gas entweichen kann. Vorzugsweise ist an dieser Mantelöffnung ein leer laufender Seitenarmextruder vorgesehen. Noch weiter bevorzugt handelt es sich bei dem Seitenarmextruder um einen Doppelschneckenextruder, der ohne Einsatzmaterial so dreht, als wenn er Einsatzmaterial in den Entgasungsmodul fördert. Dadurch hält der Seitenarmextruder die Schmelze in dem Entgasungsmodul davon ab, durch die Mantelöffnung auszutreten. Vorzugsweise findet ein besonders kurzer Seitenarmextruder Anwendung.

Ein gleichzeitig anliegender Saugzug an dem Seitenarmextruder zieht infolge gewollter Undichtigkeit in dem Seitenarmextruder Gas ab. Als Undichtigkeit kann das notwendige Spiel zwischen den Schnecken des Seitenarmextruders und dem umgebenden Gehäuse ausreichen. Gegebenenfalls wird ein zusätzliches Spiel zwischen den Schnecken des Seitenarmextruders und dem umgebenden Gehäuse erzeugt. Das kann durch spanabhebende Bearbeitung der Schnecken am äußeren Umfang geschehen.

Der Seitenarmextruder kann seitlich oder über dem Entgasungsmodul oder unter dem Entgasungsmodul angeordnet sein.

Der Kunststoff kann ein Granulat sein. Bei Extrudern kleinerer Baugröße beinhaltet das Granulat vorzugsweise eine Mischung mit allen notwendigen Mischungsbestandteilen, das als Compound vorbereitet in den Extruder eingesetzt wird. Damit entfällt für die kleine Anlage ein großer apparativer Aufwand für die Dosierung der Mischungsbestandteile. Kleinere Anlagen sind hier Extruder mit einer Baugröße kleiner 70mm, vorzugsweise kleiner gleich 50mm.

Insbesondere in größeren Anlagen werden die Mischungen ganz oder teilweise in dem Extruder hergestellt. Dann werden die verschiedenen Mischungsbestandteile einzeln oder in Vormischungen oder gemeinsam in den Extruder eindosiert. Nach dem Eintragen der Mischungsbestandteile werden die kleineren Mischungsmengen in dem Kunststoff bzw. in der Kunststoffschmelze dispergiert.

Der Einschneckenextruder und der Doppelschneckenextruder besitzen wahlweise eine bzw. zwei Schnecken mit reduzierter Förderwirkung. Normalerweise besitzt Einschneckenextruder und Doppelschneckenextruder eine hohe Förderkraft, so dass sich erhebliche Drücke ergeben, welche die Anpassung an einen reduzierten Bedarf an geschmolzenen Kunststoff erschweren.

Durch Reduzierung der Förderwirkung ergeben sich reduzierte Drücke, welche die Anpassung an einen reduzierten Bedarf erleichtern.

Die Förderwirkung wird vorzugsweise reduziert, indem in die Schnecke ein oder mehrere gegenläufige Schneckengänge eingearbeitet werden. Die Einarbeitung erfolgt wahlweise durch Fräsen. Durch das Fräsen werden die bisherigen Schneckengänge in Abständen unterbrochen.

Wahlweise können die Schnecken der Einschneckenextruder und Doppelschneckenextruder mit einem reduzierten Durchmesser versehen werden, so dass ein größerer Spalt zwischen den Schnecken und umgebendem Gehäuse entsteht. Die zylindrischen Schnecken können am Umfang auch mit Abflachungen oder Ausnehmungen versehen werden.

Es entstehen Lücken, durch die das Material ausweichen und sogar zurückfließen kann. Es entsteht eine gewollte Leckströmung.

Je größer die Lücken sind, desto besser kann der plastifizierte Kunststoff im Extruder zurückfließen. Das geschieht so lange, bis die Schmelze wieder von der Schnecke erfaßt und in Richtung des Extruderaustritts gedrückt wird. Wenn an der Düse keine Schmelze abgenommen wird, so kann die Schmelze wieder im Wege der Leckströmung ausweichen.

Bei dem Einschneckenextruder und dem Doppelschneckenextruder ist Einstellung der richtigen Leckströmung gegenüber der Situation bei einem Planetwalzentextruder ungleich kompliziert.

Die Leckströmung kann als ein "im Kreis fahren" der Schmelze angesehen werden. *In Kombination mit einer Regelung des Schmelzeaustrittes an der Düse entsteht eine extrem vorteilhafte Vorrichtung, denn die Schmelze wird im Extruder flüssig gehalten und im Kreis gefahren, bis Bedarf für einen Schmelzeaustritt entsteht. In dem Fall öffnet die Düse und ein gewünschter Schmelzeaustritt entsteht. Nach der Erfindung wird der Extruder an der Düse geregelt. Gleichzeitig wird die aus dem Extruder austretende Schmelzemenge durch Zuführung weiteren Einsatzmaterials zum Extruder ersetzt. Dabei kann eine Füllstandsregelung Anwendung finden, insbesondere, wenn der Extruder aufrecht statt liegend steht.*

Je größer die so bewegte Schmelzemenge ist, desto leichter lässt sich ein für das 3D-Drucken anfallender Schmelzebedarf vorhalten und die Vorhaltung regeln.

Maßgebend für die Schmelzemenge sind die Leckströmung und das Hohlraumvolumen des Extruders.

Nach Öffnen der Düse fließt Schmelze zum 3D-Drucken ab.

Das Hohlraumvolumen des Extruders ist der Innenraum des Extruders abzüglich des Volumens der Schnecke und anderer Einbauten, die in den Extruder ragen.

Der Füllungsgrad des Extruders kann in verschiedener Weise gemessen werden. Das kann durch Positionierung eines Messfühlers im Mantel des Füllteiles erfolgen. Der Messfühler kann jede Form der Messung beinhalten, die auf Schmelze reagiert. Dazu gehören zum Beispiel Druck, Temperatur, Ultraschall und anderer Schall.

Vorzugsweise wird der Füllungsgrad durch Gewichtsmessung oder durch optische Volumensermittlung bestimmt.

Bei Unterschreiten eines vorher festgelegten Füllungsgrades wird Einsatzmaterial zur Schmelzeerzeugung nachgeführt.

Bei der Gewichtsbestimmung ergeben sich günstige Verhältnisse, wenn das Gewicht des auf der Unterlage/Werktisch entstehenden Formteiles gemessen wird. Aus dem Gewicht läßt sich der Verbrauch an Schmelze errechnen.

Die Gewichtsmessung erfolgt vorzugsweise elektronisch mittels eines Mikrochips.

Die elektronische Messung lässt sich vorteilhafterweise zugleich dann vornehmen, wenn die Unterlage/Werktisch in einer Ruhelage ist, so dass die Messergebnisse nicht durch Beschleunigungskräfte und Bremskräfte verfälscht werden können. Im Übrigen lassen sich die Auswirkungen der Beschleunigungskräfte und Bremskräfte auch aus den Ergebnissen der Gewichtsmessung herausrechnen oder hinzurechnen.

Bei der optischen Volumensbestimmung wird das in Arbeit befindliche Formteil auf der Unterlage vermessen. Dazu bestehen verschiedene Wege. Von Vorteil ist, den geringsten Abstand zwischen der Düse und dem Formteil zu messen. Dazu eignet sich ein Lasermeßgerät.

Die Abstandsmessung ist ohnehin von Vorteil, um gleichbleibende Bedingungen für den Schmelzeauftrag sicher zu stellen. Mit den Werten der Abstandsmessung kann dann nicht nur die notwendige Nachführung von Schmelze in den Extruder, sondern auch die Bewegung der Unterlage/Werktisches in axialer Richtung der Düse gesteuert werden.

Eine erfindungsgemäß reduzierte Förderwirkung kann auch mit einem Bypass bewirkt werden, der in Förderrichtung des Extruders vor der Düse beginnt und die Schmelze ganz oder teilweise in einen geeigneten Abschnitt des Extruders zurückführt. Nur ein Teil der Schmelze wird rückgeführt, wenn die Düse teilweise geschlossen ist bzw. nur teilweise geöffnet ist. Insgesamt wird die Schmelze zurückgeführt, wenn die Düse ganz geschlossen ist. Ein geeigneter Abschnitt für die Rückführung der in den Bypass ausgewichenen Schmelze kann der Bereich der Schmelzeerzeugung oder eine in Förderrichtung des Extruders davon beabstandete Stelle sein.

Der Bypass ist eine vorzugsweise wärmeisolierte(gegebenenfalls auch beheizte) Rohrleitung. Das ein Ende dieser Rohrleitung ist in Förderrichtung des Extruders vor der Düse an eine Öffnung im Mantel des Extruders angeflanscht. Das andere Ende dieser Rohrleitung ist in Förderrichtung des Extruders an eine weitere Öffnung im Mantel des Extruders angeflanscht, die sich im Bereich der Schmelzeerzeugung oder in Förderrichtung dahinter befindet.

Besser als die Einschneckenextruder und die Doppelschneckenextruder eignen sich Planetwalzenextruder zum 3D-Drucken. Mit einem Planetwalzenextruder läßt sich die erfindungsgemäße Leckströmung viel leichter erzeugen als mit einem Einschneckenextruder.

Außerdem hat der Planetwalzenextruder gegenüber dem Einschneckenextruder andere extrem wichtige Vorteile. Dazu gehören insbesondere
-eine vielfach bessere Mischwirkung
-eine vielfach bessere Temperierung

Der Planetwalzenextruder besitzt eine in einem Gehäuse mittig angeordnete, umlaufende Zentralspindel. Die Zentralspindel ist außen verzahnt. Außen um die Zentralspindel herum laufen Planetspindeln, welche gleichfalls außen verzahnt sind und mit der Zentralspindel beim Umlauf kämmen. Die Planetspindeln laufen zugleich im Extrudergehäuse um. Dazu ist das Extrudergehäuse bzw. die Buchse im Falle einer innen im Extruder vorgesehenen Buchse mit einer Innenverzahnung versehen, mit der die Planetspindeln gleichzeitig kämmen.

Die Planetspindeln gleiten mit dem in Förderrichtung des Extruders hinteren Ende an einem Gleitring, der im Extrudergehäuse gehalten ist. Im Übrigen sind die Planetspindeln allein in der Verzahnung der Zentralspindel und der Innenverzahnung des Gehäuses gehalten.

Auch der Planetwalzenextruder beginnt mit einem Antrieb und endet mit der Düse. Dazwischen kann der Planetwalzenextruder mit einem sich über die ganze Länge erstreckenden einteiligen Gehäuse versehen sein.

Der Planetwalzenextruder kann auch zwischen Antrieb und Düse aus mehreren Modulen/Abschnitten zusammen gesetzt sein.

Dann ist eine sich zwischen Antrieb und Düse durch alle Module erstreckende gemeinsame Zentralspindel vorgesehen.

Die einzelnen Module/Abschnitte können einzelne oder mehrere unterschiedliche Aufgaben übernehmen. Vorzugsweise sind alle Module/Abschnitte des Planetwalzenextruders in Planetwalzenextruderbauweise gestaltet. Es können auch Module/Abschnitte in Planetwalzenextruderbauweise mit Modulen/Abschnitten in anderer Bauweise kombiniert werden. Das gilt besonders für das Füllteil. Die Module/Abschnitte für die Füllteile waren früher zumeist in Einschneckenextruderbauweise gestaltet. In dem Fall setzte sich die Zentralspindel im Modul/Abschnitt für das Füllteil als Einschnecke fort.

Die Planetwalzenextruder für die Verwendung zum Drucken von 3D-Formteilen können gleichfalls eine reduzierte Förderwirkung aufweisen.

Bei den Planetwalzenextrudern läßt sich das auf unterschiedliche Weise erreichen. Vorzugsweise erfolgt das an den Planetspindeln:
-die Planetspindelzahl(Zahl der umlaufenden Planetspindeln) kann reduziert/verändert werden. Je nach Baugröße des Planetwalzenextruders/Planetwalzenextrudermoduls/Abschnitts kann die Planetspindelzahl bis zu 24 und mehr betragen. Bei kleineren Baugrößen kann die Planetspindelzahl auch 5 oder 6 betragen. Die Reduzierung der Planetspindelzahl um 1 beinhaltet bei kleineren Baugrößen schon eine wesentliche Reduzierung. Bei größeren Baugrößen entsteht eine vergleichbare Reduzierung erst, wenn mehrere Planetspindeln entfernt werden. Je geringer die Zahl der Planetspindeln wird, desto größer wird der Abstand der Panetspindeln in Umfangsrichtung und desto leichter wird es für die Schmelze, zwischen den Planetspindeln zurück zu strömen.

Die Reduzierung der Planetspindelzahl findet bei 3 Planetspindeln eine Grenze.

Außerdem läßt sich die Rückströmung/Leckströmung sehr vorteilhaft durch Veränderung der Planetspindelzahl beeinflussen. Vergleichbare Möglichkeiten finden sich an einem Einschneckenextruder nicht.

Nach jeder Reduzierung/Veränderung der Planetspindelzahl werden die Planetspindeln am Umfang der Zentralspindel neu verteilt, um eine gleichmäßige Verteilung sicher zu stellen. Bei gleichmäßiger Verteilung wird die Zentralspindel im Gehäuse besser gestützt und reduziert sich die Gefahr des Überspringens von Planetspindeln. Das Überspringen führt in der Regel zu einer sofortigen Blockade des Extruders und einem Zahnbruch. Zumindest reduziert sich durch die gleichmäßige Verteilung der Planetspindeln der Verschleiß

Die Reduzierung der Planetspindel/ Änderung der Verteilung der Planetspindeln wird im Stillstand des Extruders nach der Demontage der Düse vorgenommen. Außerdem erfolgt die Reduzierung der Planetspindeln/Änderung der Verteilung modulweise/abschnittsweise. Dabei wird nicht nur die Düse, sondern werden auch alle Module/Abschnitte entfernt, die in Strömungsrichtung der Schmelze dem Modul/Abschnitt folgen, dessen Planetspindeln reduziert und neu verteilt werden sollen. Allerdings bleibt die Zentralspindel.

Für die Neuverteilung wird ungeübten Bedienungsleuten eine Schablone empfohlen, die auf die Zentralspindel geschoben wird. Die Schablone besitzt an den Stellen, an denen die Planetspindeln zwischen Zentralspindel und umgebendes Gehäuse geschoben werden, Bohrungen mit einem Durchmesser, der gleich dem Planetspindeldurchmesser ist, plus einem großzügigen Bewegungsspiel. Dadurch können die Planetspindeln an den Bohrungen leicht zwischen die Zentralspindel und das zugehörige Gehäuse geschoben werden und dabei einen Abstand voneinander einnehmen, der zumindest annähernd gleich ist.

Geübte Bedienungsleute können auf die Verwendung einer Schablone verzichten.
- auf die Rückströmung/Leckströmung kann auch mit einem reduzierten Zahnbesatz Einfluß genommen werden. Zeitgemäße Planetwalzenextruder besitzen eine zugleich als Schrägverzahnung ausgebildete Evolventenverzahnung. Vorteilhafterweise können deren Zähne erheblich verändert werden. Die unveränderte Verzahnung von Planetspindeln wird als Normalverzahnung bezeichnet. Nachfolgend sind verschiedene Veränderungsmöglichkeiten beschrieben. Vorteilhafterweise sind die nachfolgend beschriebenen Planetspindeln mit veränderter Verzahnung alle gegeneinander und gegen Planetspindeln mit Normalverzahnung leicht auswechselbar. Durch Auswechselung können wesentliche Wirkungen der Planetspindeln nach Wahl verstärkt oder nach Wahl verringert werden. An dem Planetwalzenextruder ist die Auswechselbarkeit der Planetspindeln ein extremer Vorteil, der sich in vergleichbarer Form bei Einschneckenextudern nicht findet.

Für die vorteilhafte Auswechselung bzw. Änderung der Rückströmung/Leckströmung durch Auswechselung der Planetspindeln stehen verschiedene Ausführungsformen der Planetspindeln zur Verfügung:
Die Zähnezahl wird reduziert. Die Zähnezahl kann bis auf drei Zähne, sogar bis auf eine Zahl reduziert werden. Das kann nachträglich durch Herausarbeiten von Zähnen an den Planetspindeln erfolgen. Die Entfernung der Zähne erfolgt vorzugsweise durch Fräsen und einer anschließenden Feinbearbeitung durch Schleifen. Die Planetspindeln können auch sofort mit den Zähnen hergestellt werden wie die Planetspindeln, an denen nachträglich Zähne entfernt worden sind. Vorzugsweise sind die verbleibenden Zähne gleichmäßig am Umfang der Planetspindeln verteilt.

Auch bei nur einem Zahn erfahren die Planetspindeln noch eine ausreichende Führung und Abstützung in der Außenverzahnung der Zentralspindel und der Innenverzahnung des Gehäuses. Das wird dadurch bewirkt, dass jeder Zahn sich über der Länge der Planetspindeln mehrmals schraubenförmig um die Planetspindeln herumwindet.

Es können auch alle Zähne der Planetspindeln in der Höhe reduziert werden, wenn an den Planetspindeln Abschnitte verbleiben, die den Planetspindeln eine ausreichende Führung geben. Solche Führungsabschnitte können eine Nomalverzahnung (unveränderte Verzahnung) aufweisen, die sich vorzugsweise an den Enden der Planetspindeln befindet. Außerdem ist es von Vorteil, solche Planetspindeln mit vollständig normal verzahnten Planetspindeln in einem Extruder zu kombinierten, damit die normalen Zähne während des Umlaufes um die Zentralspindel alles Einsatzmaterial aus den Zahnlücken der Zentralspindel und den Zahnlücken der Innenverzahnung des Gehäuses schieben bzw. verhindern, dass sich Einsatzmaterial in Zahnlücken sammelt und dort anbackt. Das kann als Putzen der Zahnlücken bezeichnet werden.

Vorzugsweise werden nicht alle Zähne der Planetspindeln in der Höhe reduziert. Mindestens ein Zahn behält seine ursprüngliche Höhe. Das kann den Planetspindeln die notwendige Führung/Halt in der Außenverzahnung der Zentralspindel und der Innenverzahnung des Gehäuses geben, so dass Führungsabschnitte entbehrlich werden,

Außerdem bewirken die in der ursprünglichen Höhe belassenen Zähne an den Planetspindeln auch ein Putzen der Zahnlücken an der Zentralspindel und ein Putzen der Zahnlücken an der Innenverzahnung des Gehäuses.

Die Höhenreduzierung der Zähne kann wie beim vollständigen Entfernen von Zähnen zum Beispiel durch Fräsen und anschließende Feinbearbeitung durch Schleifen geschehen.

Vorzugsweise wird dabei die Steghöhe um mindestens 20%, noch weiter bevorzugt um mindestens 40% und höchst bevorzugt um mindestens 60% reduziert.

Von Vorteil ist auch, wenn die höhenreduzierten/abgeflachten Zähne am entstehenden neuen Kopf eine Rundung erfahren. Das verbessert das Fließverhalten des Einsatzmaterials bei der Verdrängung von Einsatzmaterial in den korrespondierenden Zahnlücken der Zentralspindel und der korrespondierenden Zahnlücken der Innenverzahnung des Gehäuses.
- die Stege der Planetspindelzähne können in regelmäßigen Abständen oder in unregelmäßigen Abständen ganz oder teilweise unterbrochen werden. Eine gleichmäßige Unterbrechung entsteht zum Beispiel, wenn die Planetspindeln nach Herstellung der Normalverzahnung noch einmal gegenläufig verzahnt werden. Das führt zu einer Noppenstruktur der Planetspindeloberfläche. Deshalb werden solche Planetspindeln auch Noppenspindeln genannt.

Die gegenläufige Verzahnung geht bis auf den Grund der Zahnlücken

Wenn die gegenläufige Verzahnung weniger tief in die Planetspindeln eingeschnitten wird, ergibt sich eine andere Planetspindeloberfläche mit mehr Förderwirkung.

Eine gleichmäßige Unterbrechung entsteht auch, wenn in regelmäßigen Abständen ringförmig umlaufende Nuten in die Planetspindeln eingearbeitet werden. Diese Planetspindeln werden als Igelspindeln bezeichnet.

Die Nuten werden üblicherweise bis zum Zahngrund eingearbeitet.

Die Nuten können aber weniger tief eingearbeitet werden, um andere Eigenschaften zu erzielen.

Desgleichen kann die Verzahnung dadurch variiert werden, dass die Mehrgängigkeit der gegenläufigen Verzahnung verändert werden. Das heißt, es können Planetspindeln mit geänderter Zähnezahl verwendet werden. Dabei kann zwischen Planetspindeln gewählt werden, denen mehr oder weniger Zähne entfernt worden sind.

Die Normalverzahnung hat in Abhängigkeit von dem Zahnmodul/Zahnabmessungen und dem Teilkreisdurchmesser der Verzahnung eine bestimmte Anzahl von Zähnen, umlaufend auf dem Teilkreisdurchmesser. Diese Zähne winden sich parallel zueinander um die Planetspindeln und beinhalten die Mehrgängigkeit der Planetspindeln.

Bei gleicher gegenläufiger Verzahnung entstehen die oben beschriebenen Noppen. Es lassen sich aber in die Normalverzahnung Zähne in größerem Abstand wie bei der Normalverzahnung einschneiden. Dann entstehen keine Noppen, sondern Stege, weil die Zähne der Normalverzahnung in größeren Abstand unterbrochen werden.

Die Reduzierung der Planetspindelzahl und die Reduzierung des Zahnbesatzes an den Planetspindeln können gemeinsam oder auch einzeln vorkommen. Entsprechendes gilt in Bezug auf einen Bypass. Der Bypass kann allein oder zusammen mit der Reduzierung der Planetspindelzahl und/oder der Reduzierung des Zahnbesatzes vorkommen.

Den vorstehend beschriebenen Maßnahmen ist gemeinsam, dass Öffnungen in dem Planetwalzenextruder entstehen, durch die die Schmelze zurückströmen kann, die aktuell nicht zum 3D-Druck benötigt wird. Dies beinhaltet eine gewollte Leckströmung. Die Rückströmung/Leckströmung hält solange an, bis die Schmelze wieder von den Planetspindeln erfaßt und in die Richtung der Düse gefördert wird. Wenn dann immer noch keine Schmelze zum 3D-Drucken abgenommen wird oder nur in geringer Menge Schmelze zum 3D-Drucken abgenommen wird, so startet der Kreislauf der Schmelze neu.

Wenn Schmelze zum 3D-Drucken an der Düse ausgetragen wird, wird dem Exrtruder neues Material zugeführt. Das kann kontinuierlich erfolgen oder auch in Intervallen bzw. nach Bedarf in Abhängigkeit von obigen Messungen erfolgen.

Eine besonders vorteilhafte Form eines Extruders für einen 3D-Druck ergibt sich bei einer senkrechten/vertikalen Anordnung des Planetwalzenextruders, wie sie in der DE19534813 C2 dargestellt und beschrieben ist.

Das Gehäuse des senkrecht/vertikal angeordneten Extruders kann am oberen Ende einen großzügigen Hohlraum aufweisen, in dem sich auch schwieriges Einsatzmaterial leicht sammeln kann. Vorzugsweise ragen die Planetspindeln mindestens teilweise bis in den Hohlraum hinein, so dass die Planetspindeln das Einsatzmaterial ergreifen und in einen darunter senkrecht/vertikal angeordneten Planetwalzenextrudermodul/Planetwalzenextruderabschnitt ziehen können. Dabei kämmen die Planetspindeln mit der Außenverzahnung einer Zentralspindel und der Innenverzahnung des Extrudermodulgehäuses/Extruderabschnittgehäuses.

In dem oben vorgesehenen Hohlraum befindet sich eine Füllstandssonde, die sofort Signal zum Nachliefern von Einsatzmaterial gibt, wenn der Füllstand unter ein gewähltes Maß fällt.

Das Einsatzmaterial wird in dem Planetwalzenextrudermodul/Abschnitt erwärmt und aufgeschmolzen und nach unten zu einer Düse gefördert. Für die Erwärmung ist eine Beheizung des Modulgehäuses im Einzugsbereich hilfreich.

Nach der Anfangserwärmung führt die Verformung des Einsatzmaterials auf dem weiteren Weg nach unten zu einer weiteren Erwärmung und Aufschmelzung.

Die Düse ist wahlweise konisch ausgebildet und besitzt ein verjüngtes Austragsende. Diese Form ist strömungsgünstig. Die Länge der Düse in axialer Richtung wird vorzugsweise in Abhängigkeit vom Durchmesser der Düse gestaltet. Für kleine Durchmesser ist eine kleine Länge vorgesehen, für große Durchmesser eine große Länge. Die Austrittsöffnung der Düse ist von der Breite des auszutragenden Schmelzestranges/Faden/Band abhängig. Die Eintrittsöffnung der Düse ist abhängig von der Baugröße des Extruders, mit dem das zum Drucken bestimmte Material aufgeschmolzen wird. Je schlanker der Konus ist, desto strömungsgünstiger ist die Düse.

Es kann aber auch eine Düse ohne Konizität verwendet werden. Keine Konizität liegt vor, wenn die Düse durch eine zylindrische Bohrung in der austrittsseitigen zylindrischen Stirnwand des Extruders gebildet wird.

Die Düse ist im Ausführungsbeispiel in axialer Richtung des Extruders verschiebbar. Die Verschiebbarkeit dient dazu, die Düse ganz oder teilweise zu öffnen bzw. ganz oder teilweise zu schließen.

Wahlweise ist die Düse dazu in einer Geradführung gehalten. Dazu kann eine Schiene bzw. ein Profil vorgesehen sein, das parallel zur Düsenachse verläuft. Wahlweise können auch mehrere Schienen bzw. Profile vorgesehen sein, die voneinander beabstandet parallel zur Düsenachse verlaufen.

Bei Verwendung mehrerer Profile können einfache Rundprofile als Führung eingesetzt werden.

Bei Verwendung einer einzigen Schiene oder Profil wird vorzugsweise ein Querschnitt für die Schiene oder Profil gewählt, der die Düse oder deren Halterung an einer Drehung um die Längsachse der Schiene bzw. des Profils hindert, aber eine Bewegung in Längsrichtung der Schiene bzw. des Profils erlaubt. Die Düse bzw. deren Halterung kann die Schiene bzw. das Profil umfassen oder in die Schiene bzw. das Profil fassen.

Wahlweise hat die Führung auch die Form eines Schiebers.

Der Schieber kann ein geradlinig bewegter Schieber oder auch ein Drehschieber sein. Der Drehschieber kann auf einem Bolzen oder Achse oder Stift oder in sonstiger Weise drehbeweglich gelagert sein. Eine solche Lagerung kann auch ein Ring oder Bund oder Zylinder sein, der einen scheibenförmigen Schieber außen umschließt.

Die Führung kann auch durch einen Schwenkarm gebildet werden. Dann ist die Düse mit dem Schwenkarm gehalten.

Dann ist von Vorteil, wenn die Düsen-Mittelachse in der Schließstellung mit der Mittelachse der Zentralspindelspitze fluchtet. Die Schließstellung ist die Stellung, in der die Düse schließend auf der Zentralspindelspitze aufliegt.

Zum Öffnen der Düse wird die Düse mit dem Schwenkarm von der Zentralspindelspitze abgehoben. Dabei ist der Einfluß einer Änderung der Mittelachsenlage der Düse gegenüber der Mittelachse der Zentralspindelspitze vernachlässigbar.

Die geradlinige Düsenbewegung kann auch mit Hilfe eines Roboters erfolgen. Bekannte Roboter besitzen einen Arm, der mehrfach gelenkig ist, so dass Bewegungen in jede Richtung ausgeübt werden können. Natürlich kann ein Roboter viel mehr als nur eine geradlinige Bewegung ausführen. Entsprechend aufwendig ist seine Konstruktion und seine Steuerung. Aufgrund der hohen Stückzahlen handelsüblicher Roboter und der damit verbundenen Serienfertigung ist ein solcher Roboter immer noch günstiger als eine andere Düsenführung, die in Einzelfertigung erstellt wird.

Für die Bewegung des Schwenkarmes ist ein elektrisch gesteuerter Antrieb vorgesehen, der auf kurze Steuerimpulse reagiert.

Bei geöffneter Düse fließt Schmelze als Schmelzefaden oder als Schmelzeband oder Schmelzestrang auf einen Werktisch, der quer zur Mittelachse der Zentralspindelspitze und zugleich in Richtung der Mittelachse der Zentralspindelspitze bewegbar ist. Die Bewegungen des Werktisches und der Düse werden so gesteuert, dass mit dem austretenden

Schmelzefaden/Band/Strrang ein 3D-Formteil erzeugt wird.

Für die Anwendung des erfindungsgemäßen Druckens auf Baukörper/Gebäude ist eine Düse mit mehreren, wechselbaren Austrittsöffnungen von Vorteil. Mit großen Austrittsöffnungen lässen sich große Schmelzemengen austragen und eine große Bauleistung erreichen
Gleichzeitig kann die Düse mit kleineren Austrittsöffnungen versehen sein, zum Beispiel für dünnere Schmelzefäden.

Von Vorteil ist die Wechselbarkeit der verschiedenen Austrittsöffnungen. Vorzugsweise sind die Austrittsöffnung während eines Herstellungsvorganges wechselbar. So kann bei der Herstellung eines Gebäudes ein Boden mit großer Schmelzeleistung hergestellt werden, während angrenzende dünne Wände besser mit kleiner Austrittsöffnung und entsprechend geringer Leistung hergestellt werden.

Desgleichen kann bei der Herstellung oben erläuterter, hohl ausgebildeter Wände zweckmäßig sein, die äußeren Schichten der Wand mit größerer Düsenaustrittsöffnung und die die Schichten verbindenden Streben /Kammern mit kleinerer Düsenaustrittsöffnung herzustellen.

Eine solche Düse kann durch einen Schieber gebildet werden, der mit einem Verstellantrieb versehen ist und rechnergestützt gesteuert wird. Der Schieber kann eine zylindrische Form aufweisen und in einem Gehäuse mit einer für den Schieber passenden Bohrung sitzen. Der Schieber hat verschiedene (kleine und große) Durchgangsbohrungen, die im Abstand voneinander quer zur Längsachse des Schiebers verlaufen. Der Schieber kann auch Düsenöffnungen mit Neigung zur Mittelachse des Extruders aufweisen. Es können auch Düsenöffnungen mit verschiedener Neigung vorgesehen sein.

Mit den so geneigten Düsenöffnungen können die Schmelzefäden und Schmelzebänder/Schmelzestränge auch an anderer Stelle abgelegt werden als bei einer Düsenöffnung , deren Achse mit der Mittelachse des Extruders fluchtet.

Der Schieber sitzt quer zur Düsenachse verschiebbar und drehbar an oder in der Düse. Durch Bewegung des Schiebers, zum Beispiel durch Verschieben in Längsrichtung, lässt sich die passende Bohrung in Position bringen. Durch Drehen kann die Düse geschlossen bzw. geöffnet werden.

Wahlweise ist die Düse auch mit einem Kugelhahn als Stellventil zum Verschließen und Öffnen kombiniert. Die Düse kann auch als Kugelhahn ausgebildet sein. Dabei befindet sich im Kugelhahn bzw. in der Düse eine Kugel mit einer Durchtrittsöffnung. Durch Drehen der Kugel wird die Durchtrittsöffnung verkleinert oder geschlossen oder geöffnet. Die Kugel kann auch weitere Aufgaben erfüllen. Zum Beispiel können mehrere unterschiedliche Durchtrittsöffnungen in der Kugel eingebracht werden. Diese Durchtrittsöffnungen werden an unterschiedlichen Stellen der Kugel eingebracht und durch die Kugelmitte gelenkt. Dabei ist von Vorteil , wenn alle Bohrungen auf einem Kreis am Kugelumfang liegen, so dass durch eine Drehung der Kugel unterschiedliche Durchtrittsöffnungen in den Schmelzestrom gebracht werden können. Dies kann zur Einstellung der Schmelzeströmung und zur Formgebung des Schmelzestranges genutzt werden. Anstelle der Kugel kann auch ein konischer Verschlußkörper in dem Hahn bzw. in der Düse angeordnet werden, der in gleicher Weise wie die Kugel mit einer oder mehreren Durchtrittsöffnungen versehen ist, aber leichter als die Kugel herzustellen ist und leichter in eine dichtende Berührung mit dem umgebenden Mantel gebracht werden kann.

Wahlweise kann auch ein Roboterarm als Düse genutzt werden, indem der Roboterarm mit einer Durchtrittsöffnung für die Schmelze versehen ist und an der Austrittsöffnung des Extruders montiert wird, so dass die Schmelze durch den Roboterarm strömt und von dem Roboterarm an beliebige Stelle gelenkt werden kann.

Wahlweise kann die Düse auch durch einen drehbaren und/oder schwenkbaren und/oder verschiebbaren Deckel gebildet werden, der mit einer Vielzahl von Düsenöffnungen versehen ist, die nach Belieben durch Drehen oder Schwenken oder Verschieben des Deckels vor dem Extruderaustritt in Position gebracht werden können. Dabei sind kleinere und größere Düsenöffnungen und Düsenöffnungen mit unterschiedlicher Querschnittsform vorgesehen. Damit kann dem austretenden Schmelzestrang/Band/Faden ein anderer Querschnitt gegeben werden, so dass zum Beispiel im einen Fall Schmelzefäden und im anderen Fall Schmelzebänder entstehen. Die Düsenöffnungen können wie bei dem Schieber mit der Mittelachse des Extruders fluchten oder geneigt dazu verlaufen.

Der drehbare und/oder schwenkbare Deckel kann mittig und/oder am äußeren Rand geführt und gehalten sein. Mittig kann die Führung und Halterung durch einen Bolzen/Zapfen/Dorn/Achse gebildet werden. Am Rand kann die Führung und Halterung durch einen Ring/Bund/Zylinder gebildet werden.

Öffnen und Schließen des Extruderaustritts erfolgt durch Verschwenken oder Drehen eines geschlossenen Deckelteiles vor den Extruderaustritt.

*Nach der Erfindung sind die Düsen beheizt oder nicht beheizt.*

*Nicht beheizte Düsen sind davon abhängig, dass die Schmelze in der Düse schmelzfähig bleibt oder die Düse nach jedem Schmelzstoß*/*Schmelzefluß gereinigt wird. Die Schmelze bleibt in nicht beheizten Düsen flüssig, wenn eine Unterbrechung des Schmelzeflusses keine Abkühlung bis unter die Schmelztemperatur bewirkt. Die Abkühlung bis zur Verfestigung der Schmelze ist zeitabhängig und von der Ausgangs-Schmelzetemperatur abhängig. Bei zeitlich geringer Unterbrechung bleibt die Fließfähigkeit der Schmelze gesichert. Die übliche Schmelzetemperatur während des Extrusionsbetriebes liegt mindestens 5 Grad Celsius, vorzugsweise mindestens 10 Grad Celsius, noch weiter bevorzugt mindestens 15Grad Celsius über der Schmelztemperatur und höchst bevorzugt mindestens 20 Grad Celsius über der Schmelztemperatur, bei der eine Verflüssigung des Kunststoffes eintritt.*

*Von Vorteil ist, die Schmelzetemperatur während des Extrusionsbetriebes so einzustellen, dass eine Unterbrechungsdauer von mindestens 2Sekunden, vorzugsweise von mindestens 4 Sekunden, noch weiter bevorzugt von mindestens 6 Sekunden und höchst bevorzugt von mindestens 8 Sekunden möglich ist. Damit vereinfacht sich die Handhabung der Vorrichtung wesentlich.*

*Alternativ oder zusätzlich ist eine Beheizung der Düse vorgesehen. Mit einer Beheizung der Düse kann die Abkühlung der Schmelze in der Düse im Falle einer Unterbrechung verlangsamen, so dass eine längere Unterbrechung möglich ist. Im Extremfall kann die Beheizung so gestaltet werden, dass keine Abkühlung der Schmelze in der Düse stattfindet. Vorzugsweise wird eine Unterbrechung jedoch kurz gehalten, um negative Auswirkungen der Temperatur auf die Molekularstruktur zu vermeiden.*

Für die Bewegungen der Düse sind Schrittschaltmotore von Vorteil. Zeitgemäße Motore haben eine Schrittgeschwindigkeit bis 400 Schritte pro Sekunde bei hoher Genauigkeit.

Wenn bei der Herstellung von Gebäuden die gesamte Extrusionsanlage zu bewegen ist, können Servomotore geeignet sein, die auch diese Lasten mit kurzer Reaktionszeit und hoher Genauigkeit bewegen können.

Wahlweise sitzt vor dem Extruderaustritt auch eine - bereichsweise - in alle Richtungen schwenkbare Düse. Dabei besteht die Düse aus einem Anschlußteil an den Extruderaustritt, einem Gelenk und einem Düsenaustrittsteil. Die Schmelze strömt dabei durch das Anschluß, durch eine Öffnung im Gelenk und durch das Düsenaustrittsteil.

Wahlweise kann das Gelenk dabei zugleich den Anschluß an den Düsenaustritt und/oder das Düsenaustrittsteil bilden.

Außerdem kann das Gelenk als Kugelgelenk ausgebildet sein.

*Als Düse kommt auch ein Abschnitt einer Hohlkugel in Betracht. Hohlkugeln besitzen außen eine Kugelform und innen einen kugelförmigen Hohlraum mit gemeinsamem Mittelpunkt in Bezug auf die Außenform, so dass ein kugelförmiger Mantel besteht. Nach der Erfindung findet ein Abschnitt dieses Hohlmantels Anwendung.*

*Dabei ist wahlweise vorgesehen, dass der Abschnitt des Hohlmantels auf dem Ende einer Schmelzezuleitung gleitet, das an der Berührungsfläche mit dem Abschnitt den gleichen Radius wie der Abschnitt des Hohlmantels.*

*Der Abschnitt des Hohlmantels ist mit verschiedenen Düsenöffnungen versehen. Die Düsenöffnungen sind auf der Mantelfläche des Abschnittes verteilt. Durch eine Verschiebung des Abschnittes auf dem Ende der Schmelzezuleitung kann jeweils eine andere Düsenöffnung in eine fluchtende Stellung mit der Öffnung der Schmelzezuleitung gebracht werden oder aber auch eine geschlossener Teil des Hohlmantelabschnittes zur Verschließen der Schmelzezuleitung vor deren Öffnung gebracht werden.*

*Die Bewegung des Hohlmantelabschnittes kann mit Hilfe von Kraftkolben gesteuert werden. Zum Beispiel können drei Kraftkolben gleichmäßig verteilt am Umfang des Hohlmantelabschnittes gelenkig angeordnet sein, so dass sie den Hohlmantelabschnitt in jeder Richtung verschieben und in der jeweils gewünschten Stellung mit dem Kopf der Schmelzezuleitung verspannen können.*

*Wahlweise wird der Hohlmantelabschnitt an der Seite, welche der Schmelzezuleitung abgewandt ist, mit einer Führung gestützt. Die Führung erleichtert die Bewegung des Hohlmantelabschnittes.*

*Für die Schieber und Hohlmantelabschnitte, welche durch Verschieben andere Düsenöffnungen vor die Schmelzezuleitung bringen können, sind möglichst geringe Verstellwege von Vorteil. Das gilt insbesondere für eine punktweise Verlegung der Schmelze. Vorzugsweise ist der Verstellweg zwischen zwei benachbarten Schieberstellungen bzw. Hohlmantelabschnittsstellungen kleiner 10mm, noch weiter bevorzugt kleiner 8mm und höchst bevorzugt kleiner 6mm.*

Die austretende Schmelze trifft in der Regel auf Schmelze, die schon ganz oder teilweise abgekühlt ist. Damit gleichwohl die Voraussetzung zur Verbindung der neuen Schmelze mit der schon vorher verlegten Schmelze gegeben ist, ist eine Erwärmung der vorher verlegten Schmelze an der Berührungsfläche vor Auftreffen der neuen Schmelze vorgesehen. Das kann mittels eines elektrisch betriebenen Heizdrahtes erfolgen, der wahlweise an der Düse befestigt wird und bis dicht über die zu erwärmende Fläche ragt.

Eine andere Möglichkeit zur Wiedererwärmung der vorher verlegten Schmelze ist die Beaufschlagung der Berührungsfläche mit Heißluft. Die Heißluft kann vorteilhafterweise auch in einiger Entfernung von der Berührungsfläche austreten. Das ist für andere Bereiche des Formteiles unschädlich und erleichtert die Zuführung von Heißluft.

Die Erwärmung der Berührungsfläche kann auch durch Berührung mit einem erwärmten Gegenstand erfolgen, der auf dem bereits verlegten und abgekühlten Schmelzefäden/Schmelzebändern/Strängen gleitet oder rollt.

In der Zeichnung ist ein Ausführungsbeispiel der Erfindung dargestellt.

Auf einer Säule 1 ist ein Schwenkarm 7 schwenkbeweglich befestigt. Der Schwenkarm 7 trägt Motor und Getriebe für ein Planetwalzenteil 2. Das Planetwalzenteil 2 ist mit einem Aufgabetrichter 4 versehen, der eine seitliche Aufgabeöffnung 6 in Form eines Maules besitzt. Mit 3 sind die Zu- und Abflüsse für Heiz - bzw. Kühlmedien bezeichnet.

Das Planetwalzenteil 2 besitzt einen nachfolgend noch erläuterten, verschließbaren Austritt. Das Planetwalzenteil 2 besitzt in üblicher Ausbildung ein Gehäuse, eine Zentralspindel und Planetspindeln, die aufgrund geeigneter Verzahnung sowohl mit der Zentralspindel als auch mit einer in dem Gehäuse angeordneten, innen verzahnten Buchse kämmen. Im Ausführungsbeispiel ist der Teilkreisdurchmesser der Innenverzahnung 30mm. Der Teilkreisdurchmesser der Innenverzahnung kennzeichnet zugleich die Baugröße, hier die Baugröße 30. In anderen Ausführungsbeispielen kann die Baugröße größer, zum Beispiel 50, oder kleiner sein.

Im Ausführungsbeispiel ist die Anzahl der Planetspindeln 3. Die Planetspindeln sind gleichmäßig am Umfang der Zentralspindel verteilt. Bei einer üblichen Zahl von 5 Planetspindeln beinhaltet das eine Reduzierung des Planetspindelbesatzes um 40%. In anderen Ausführungsbeispielen kann die Reduzierung mehr oder weniger sein.

Zwischen den Planetspindeln besteht so viel Abstand, dass der Extruder bei geschlossener oder nur teilgeöffneter Düse weiterlaufen kann und die gegen die Düse geförderte überschüssige Schmelze als Leckströmung zwischen den Planetspindeln zurück fließt, bis die Planetspindeln die zurück geströmte Schmelze wieder erfassen und erneut in Richtung der Düse fördern. Wenn die Düse dann noch nicht geöffnet ist, wiederholt sich die Rückströmung/Leckströmung.

Vorteilhafterweise wird die Rückströmung/Leckströmung genutzt, um bei Anfahren des Extruders und geschlossener Düse zunächst eine perfekte Schmelzemischung zu erreichen, bevor die Düse geöffnet wird. Dann kann ohne Anfahrverlust gefahren werden. Der Anfahrverlust ist bei anderen Extrusionsvorgängen leichter zu verkraften als bei einer Herstellung eines 3D-Druckes auf einer Unterlage/Werktisch. Im Falle von Anfahrverlusten würde sich unzureichend aufbereitete Schmelze auf der Unterlage/Werktisch ablegen. Oder der Werktisch müsste aus der Arbeitsrichtung der Düse herausgefahren werden und der aus dem Anfahren anfallende Schmelzeverlust müßte verschmutzungsfrei entsorgt werden. Verschmutzungsfrei heißt, die Anlage soll nicht durch die beim Anfahren unbrauchbare Schmelze verschmutzt werden.

Ein weiterer Vorteil der Rückströmung/Leckströmung ergibt sich, wenn die Leckströmung möglichst weit zum Aufgabetrichter/Fülltrichter reicht, über den das Einsatzmaterial in den Extruder aufgegeben wird. Dort besteht noch eine hohe Reibung der Feststoffpartikel. Diese Reibung wird drastisch durch die rückströmende Schmelze verringert. Die Rückströmung/Leckströmung wirkt wie ein Schmiermittel zwischen den Feststoffpartikeln. Außerdem verbessert sich die Mischung.

Vorteilhafterweise lässt sich das erfindungsgemäße Drucken nicht nur mit senkrecht stehendem Extruder, sondern auch mit horizontal stehendem Extruder oder geneigt stehendem Extruder ausüben. Das Drucken mit senkrecht/vertikal stehendem Extruder hat den Vorteil, dass die Düse bis dicht über die Fläche gebracht werden kann, auf der die Schmelze abgelegt werden soll. Das erleichtert ein genaues Drucken und vereinfacht die Konstruktion für die Vorrichtung. Entsprechendes gilt für eine geneigte Anordnung der Unterlage/Werktisches. Die horizontale Anordnung und Bewegung der Unterlage/Werktisches hat gleichfalls erhebliche Vorteile.

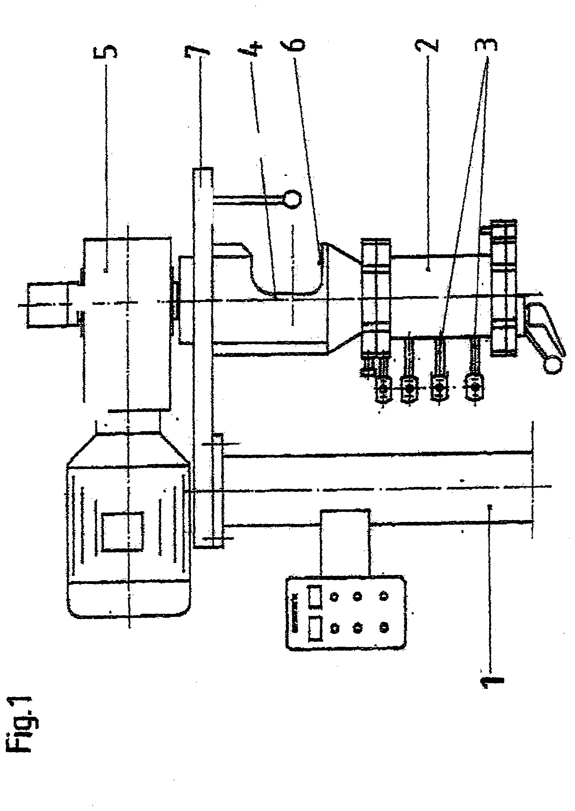

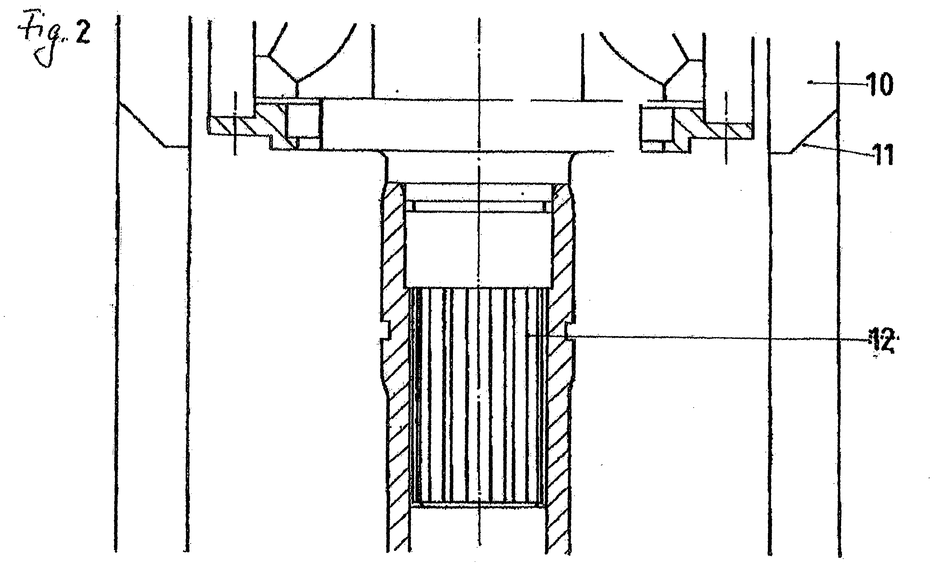

Die Fig. 2 bis 4 zeigen unmaßstäbliche Einzelheiten der Extrusionsanlage nach Fig. 1.

Fig. 2 zeigt den Aufgabetrichter mit einem Gehäuse 10, das mit einem oberen Flansch an dem Schwenkarm 7 befestigt ist. Der Schwenkarm trägt einen Antrieb 5. Es führt eine Antriebswelle 12 von dem Antrieb zu der Zentralspindel des Planetwalzenteils 2. Die Kontur der Öffnung 6 in Fig. 2 ist mit 11 bezeichnet.

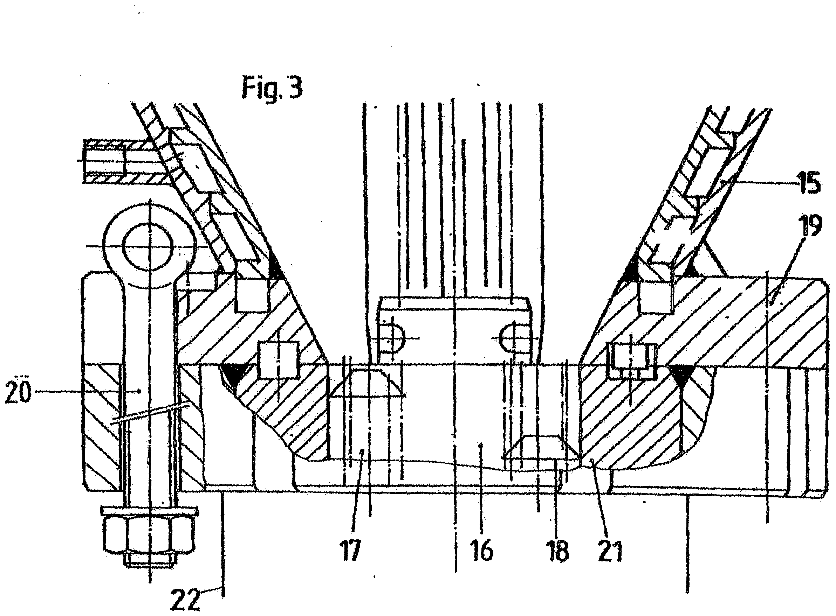

Die Fig. 3 zeigt den eigentlichen Trichter 15 der Materialaufgabe 4. Die Zentralspindel ist mit 16 bezeichnet, die Planetspindeln mit 17 und 18. Die Planetspindeln 17 und 18 besitzen unterschiedliche Längen, so dass sie unterschiedlich hoch in den Trichter 15 ragen. Das gibt den Planetspindeln ein vorteilhaftes Einzugsverhalten in Bezug auf das in den Trichter aufgegebene Einsatzmaterial.

Im Betriebsfall gleiten die umlaufenden Planetspindeln an einem Anlaufring.. Das Gehäuse 22 des Planetwalzenteiles 2 ist mit Schwenkschrauben am unteren Rand des Aufgabetrichters 4 lösbar befestigt. Die Schwenkschrauben erleichtern das Lösen und Befestigen, indem sie eingeschwenkt bzw. durch Schwenken außer Eingriff gebracht werden können.

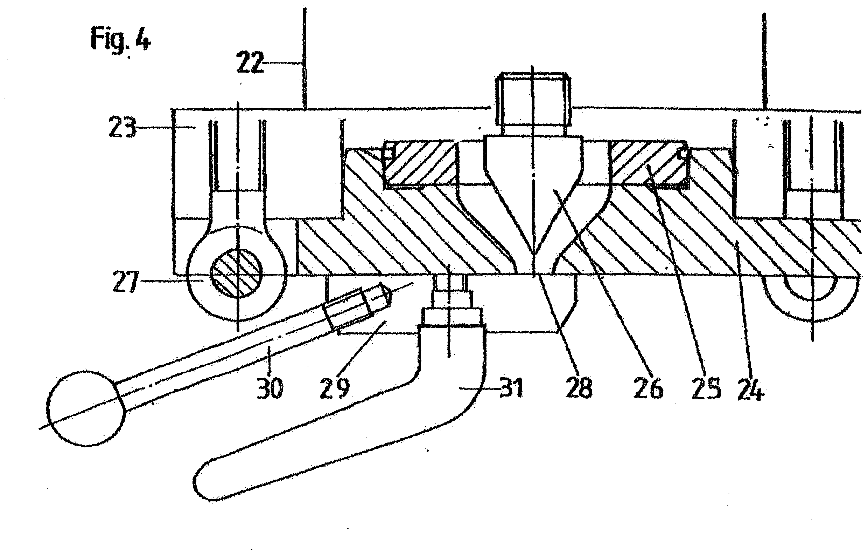

Fig. 4 zeigt am unteren Ende des Gehäuses 22 einen Flansch 23, der den Anlaufring 25 für die Planetspindeln aufnimmt. Die Zentralspindel endet in einer Spitze 26, welche in einem aufgeschraubten Deckel 24 die Austrittsöffnung 28 des Extruders bestimmt. Der Deckel 24 bildet mit der Austragöffnung und einem Verschluß 29 eine Düse. Als Verschraubung für den Deckel dienen wiederum Schwenkschrauben 28. An dem Deckel befindet sich ein drehbeweglicher Verschluß 29. Der Verschluß 29 kann die Austrittsöffnung 28 des Extruders ganz oder teilweise öffnen bzw. ganz oder teilweise schließen. Im Ausführungsbeispiel wird der Verschluß von Hand an einem Hebel 30 in die gewünschte Stellung gebracht . Dort kann der Verschluß mit einem weiteren Hebel 31 arretiert werden. Die Arretierung erfolgt durch eine Verschraubung.

Bei Verwendung der vorstehend beschriebenen Anlage zum 3D-Drucken von Formteilen mit Kunststoffschmelze wird der Bedarf an Schmelze für eine Verlegung eines Schmelzefadens auf einer Unterlage/Werktisch bzw. zur Verlegung auf einem in Herstellung befindlichen Formteil von den Bedienungsleuten eingeschätzt und die Austrittsöffnung von Hand dem Bedarf angepaßt. Das kann schon recht genau sein, weil übermäßige Schmelzemengen oder Mindermengen von Schmelze beim Drucken an dem Baufortschritt des Formteils sofort sichtbar werden.

Die Unterlage/Werktisch ist horizontal in alle Richtungen bewegbar. Für die horizonale Bewegung ist die Unterlage/Werktisch im Ausführungsbeispiel in zwei Linearführungen gehalten, von denen die eine Linearführung im Maschinenrahmen gehalten ist und die andere Linearführung trägt.

Im Ausführungsbeispiel ist der Extruder darüber hinaus mit dem Schwenkarm 7 an der Säule 1 höhenverstellbar gehalten. Dazu ist der Schwenkarm 7 auf der Säule 1 geführt und mit einem nicht dargestellten Hubantrieb versehen.

Für Versuche kann die Bewegung der Unterlage/Werktisches mit Hand erfolgen, um für jedes Formteil eine optimale Verlegung des Schmelzebandes herauszufinden. Nach Festlegung dieser optimalen Verlegung des Schmelzebandes kann die Bewegung in eine Steuerung für einen Bewegungsantrieb der Unterlage/Werktisch und den Hubantrieb des Schwenkarmes einprogrammiert werden. In einem anderen Ausführungsbeispiel ist die Steuerung so ausgelegt, dass sie die Daten der händischen Bewegung speichert und auf Wunsch/Knopfdruck nachfährt.

Der Bewegungsantrieb für die Horizontalbewegung ist für die händische Bewegung von der Unterlage/Werktisch abkoppelbar bzw. für eine automatische Bewegung mit der Unterlage/Werktisch koppelbar.

Im Ausführungsbeispiel bleibt der Hubantrieb während der händischen Versuche mit dem Schwenkarm gekoppelt.

Im Ausführungsbeispiel setzt sich der Antrieb für die Horizontalbewegung aus zwei Stellmotoren zusammen. Jeder Linearführung ist ein Stellmotor zugeordnet. Bei den Stellmotoren handelt es sich um handelsübliche Schrittschaltmotore. Die Steuerung wirkt auf beide Motore, darüber hinaus auch noch auf den Hubmotor.

Zur Automatisierung ist in einem anderen Ausführungsbeispiel anstelle des Verschlusses 29 ein Schieber vorgesehen, der mit einem Schrittschaltwerk bewegt wird. Das Schrittschaltwerk wird bedarfsabhängig betätigt, wobei der Bedarf an Schmelze in vorherigen Testreihen ermittelt wird.

In einem noch anderen Ausführungsbeispiel wird der Bedarf an Schmelze durch Vermessung eines Musterstückes errechnet und das Schrittschaltwerk des Schiebers mit den erlangten Daten gesteuert.

In einem noch weiteren Ausführungsbeispiel wird der Bedarf an Schmelze anhand einer rechnergestützten 3D-Konstruktion ermittelt und damit das Schrittschaltwerk des Schiebers gesteuert.

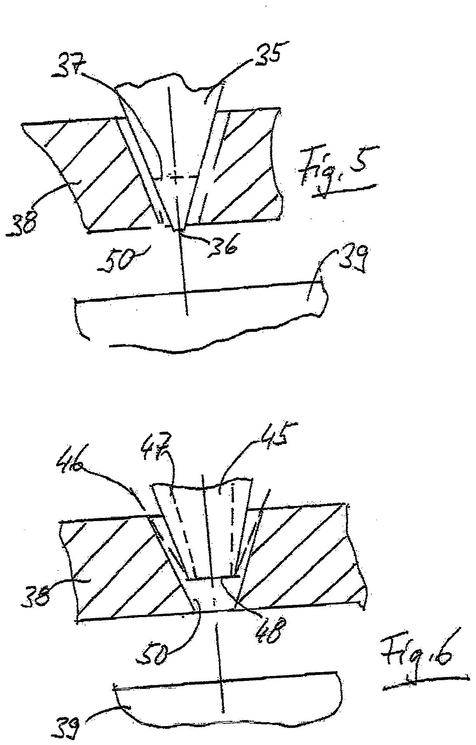

Fig. 5 zeigt ein weiteres Ausführungsbeispiel der Erfindung.

Dabei ist anstelle des fest am Extrudergehäuse verschraubten Deckels ein Deckel 38 vorgesehen, der verschiebbar in dem Gehäuse des Extruders angeordnet ist. Der Deckel 38 ist einer nicht dargestellten Bohrung des Gehäuses geführt und zugleich gegen unerwünschten Schmelzeaustritt abgedichtet. Im Ausführungsbeispiel wird die Abdichtung durch eine Membran aus Federstahl gebildet. Die Nachgiebigkeit der Membran ist auf den notwendigen Verstellweg des Deckels 38 zum Öffnen und Schließen der Düse ausgelegt.

Der Deckel 38 besitzt einen rechnergestützten Verstellantrieb. Der Deckel bildet mit der Öffnung 50 eine Düse. Die Verstellung des Deckels 38 dient zur bedarfsabhängigen Steuerung des Öffnungsspaltes zwischen der konischen Öffnung 50 des Deckels 38 und der konischen Spitze 35. Bei geringer werdendem Bedarf wird der Spalt verringert. Bei größer werdendem Bedarf wird der Spalt vergrößert. Der Bedarf wird anhand einer rechnergestützten 3D-Konstruktion ermittelt. Mit den Daten aus der Bedarfsrechnung kann unmittelbar die Steuerung des beweglichen Deckels 38 gespeist werden.

Fig. 5 zeigt schematisch auch eine Unterlage/Werktisch 39, auf dem die als Faden aus der Öffnung austretende Schmelze verlegt wird. Die Unterlage/Werktisch 39 ist in der Horizontalen in alle Richtungen und außerdem in der Vertikalen bewegbar. Die Vertikalbewegung ist vorgesehen, um trotz wachsendem Formteil einen immer gleichen Abstand zwischen dem Schmelzeaustritt aus dem Extruder und Fläche zu wahren, auf der der Schmelzefaden bzw. das Schmelzeband bei wachsendem Formteil zur Ablage kommt. Die Fläche befindet sich im Ausführungsbeispiel immer senkrecht/vertikal unter dem Schmelzaustritt. Beim Aufbau des Formteiles wird das dadurch erreicht, dass die Unterlage/Werktisch 39 mit dem wachsenden Formteil horizontal verschoben wird, bis die betreffende Fläche genau unter dem Schmelzeaustritt liegt.

Das Schmelzeband hat im Ausführungsbeispiel eine Breite von 4mm und eine Dicke von 1,5mm. Die zugehörige Düse ist dem Querschnitt angepaßt. In anderen Ausführungsbeispielen kommen andere Düsenquerschnitt zum Einsatz, zum Beispiel runde Düsenquerschnitte. In einer ersten Lage/Schicht werden zwei Schmelzebänder mit einer Breite von 4mm zu einer Gesamtbreite von 8mm nebeneinander verlegt. In der nächsten, zweiten Schicht/Lage wird zunächst eine Düse in Anspruch genommen, durch die ein Schmelzeband mit nur 2mm Breite und 1,5mm Dicke verlegt wird. Parallel wird eine Schmelzeband mit der ursprünglichen Breite von 4mm und gleicher Dicke verlegt, daneben ein weiteres Schmelzeband mit nur 2mm Breite, so daß die drei Schmelzebänder zusammen auch eine Breite von 8mm aufweisen. Dabei überlappt das mittlere Schmelzeband der zweiten Lage/Schicht die beiden Schmelzebänder der ersten Schicht/Lage. In der dritten Schicht/Lage werden wieder zwei Schmelzebänder von 4mm nebeneinander verlegt, die sich mit den Schmelzebändern der zweiten Schicht/Lage überlappen. Die schichtweise Verlegiung von 2 bzw. 3 Schmelzebändern wiederholt sich in den nächsten Schichten/Lagen. Mit der Überlappung wird der entstehenden Wand eine größere Festigkeit gegeben als ohne Überlappung.

Nach Fig. 5 haben die Spitze 35 der Zentralspindel und die Austrittsöffnung 50 die gleiche Konizität. Dabei ist das Ende 36 der Spitze so klein, dass die Spitze 35 mit dem Ende 36 in der Schließstellung gegenüber dem Deckel 38 vorragt.

Wenn das Ende 37 der Spitze 35 der Zentralspindel allerdings viel größer ist, so liegt das Ende 37 der Spitze in der Schließstellung gegenüber dem Deckel 38 zurück.

Fig. 6 zeigt bei gleichem Deckel 38 und Austrittsöffnung 50 eine Spitze 45 der Zentralspindel mit unterschiedlichen Konizitäten. Bei einem gestrichelt dargestellten konischen Mantel 47 kann das flächenkleinere Ende 48 der Spitze 45 durch die Austrittsöffnung in der Schließstellung vorragen, so dass die untere Kante den konischen Mantel 47 berührt.

Wenn die Spitze 45 allerdings einen konischen Mantel mit der gestrichelt dargestellten Konizität 46 aufweist, so berührt die obere Kante des Deckels 38 den konischen Mantel 46.

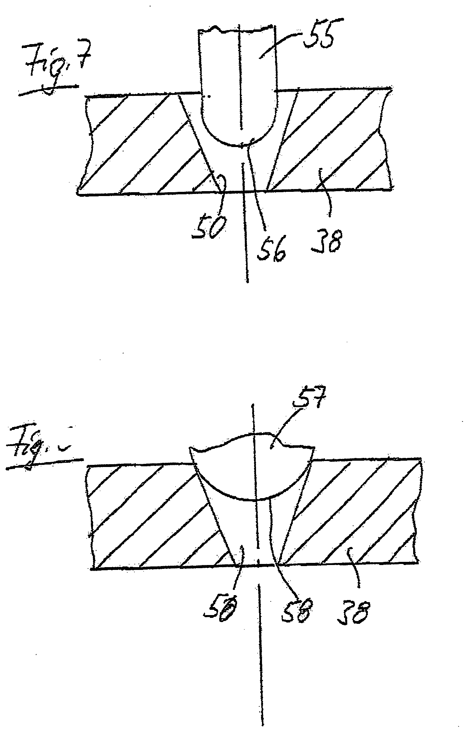

In den Ausführungsbeispielen nach Fig. 7 und 8 wird ein gleicher Deckel 38 mit gleicher Austrittsöffnung 50 mit anderen Spitzen der Zentralspindel kombiniert. Fig. 7 zeigt eine Spitze 55 mit einem kugeligen Ende 56, das in der Schließstellung an der Innenfläche der Austrittsöffnung 50 anliegt.

Die kugelige Form der Spitze 55 vereinfacht die Schließbewegung, indem für die Schließbewegung keine planparallele Stellung des Deckels zum Gehäuse mehr erforderlich ist. Dadurch eignet sich auch eine Schwenkbewegung zum Schließen der Düse.

Fig. 8 zeigt eine Spitze 57 mit einem kugeligen Ende 58, das aufgrund eines großen Durchmessers an der oberen Kante des Deckel 38 aufliegt.

## Patentansprüche

1. 3D-Drucken mit schmelzflüssigem Kunststoff zur Herstellung eines Formteiles unter Verwendung eines Extruders und Auftragen des flüssigen Kunststoffes durch eine verschließbare Düse, wobei der Kunststoff mit Additiven, Zuschlägen und Füllstoffen vermischt ist,
wobei die Schmelze durch Verflüssigung des Kunststoffes im Extruder erfolgt, **gekennzeichnet durch**
a)Verwendung eines Planetwalzenextruders
b)wobei der Planetwalzenextruder eine reduzierte Förderwirkung aufweist
c)so daß der Extruder zumindest bei geschlossener Düse eine Rückströmung/Leckströmung der Schmelze besitzt,
d)wobei ein austretendes Schmelzeband oder eine Schmelzefaden oder ein Schmelzestrang oder ein Schmelzpunkt erzeugt wird.

2. 3D-Drucken nach Anspruch 1, **gekennzeichnet durch** die Verwendung eines Extruders mit einer Zentralspindel (17) mit einer Spitze (26, 35, 45, 55, 57) am Exrtruderaustritt, wobei der Austrittsöffnung eine verschließbare Düse in Strömungsrichtung der Schmelze nachgeordnet ist,
wobei die Düse **durch** eine Verschiebung der Zentralspindel (17) und/oder durch eine Bewegung der Düse und/oder **durch** einen Schieber oder Hohlmantelabschnitt geschlossen oder geöffnet wird,
wobei noch weiter bevorzugt eine Düse verwendet wird,
die in axialer Richtung der Zentralspindel (17) gegen die Spitze (26, 35, 45, 55, 57) Zentralspindel bewegbar ist, um die Düse ganz oder teilweise zu verschließen, und von der Spitze (26, 35, 45, 55, 57) Zentralspindel (17)weg bewegbar ist, um die Düse ganz oder teilweise zu öffnen.

3. 3D-Drucken nach Anspruch 1 oder 2, **gekennzeichnet durch** die Herstellung von Formteilen **durch** schichtweise/lageweise Verlegung der Schmelzestränge/Faden/Bänder,
wobei die Verlegung eines Schmelzestranges/Faden/Bandes innerhalb einer Schicht unterbrochen wird, wenn der Schmelzestrang/Faden/Band an einen bereits verlegten Schmelzestrang/Faden/Band stößt, bzw. an einer Stelle fortgesetzt wird, wo noch kein Schmelzestrang verlegt worden ist,
wobei vorzugsweise innerhalb der Schichten/Lagen eine zeilenweise Verlegung stattfindet, wobei mit Erreichen einer Formteilkante eine Umsteuerung erfolgt, und/oder die Verlegung des Schmelzestranges/Faden/Band beim Übergang in eine benachbarte Zeile einer Schicht/Lage ohne Unterbrechung erfolgt und sich ein mäandernder Verlauf des Schmelzstranges/Faden/Band ergibt
und/oder die Schmelzestränge/Faden/Band an Stoßstellen mit anderen Schmelzesträngen/Faden/Bänder im Verband verlegt werden
und/oder die Schmelzestränge/Schmelzebänder/Faden einen Versatz zu benachbarten Schmelzestränge/Schmelzebänder/Faden von mindestens 1mm, vorzugsweise mindestens 2mm, noch weitere bevorzugt von mindestens 3mm und höchstens 4mm aufweisen.

## Claims

1. 3D printing with molten plastics to produce a moulded part using an extruder and applying the liquid plastics through a closable nozzle, the plastics being mixed with additives, additions and fillers,
the melting occurring by liquefaction of the plastics in the **extruder, characterized by**
a) the use of a planetary roller extruder
b) the planetary roller extruder having a reduced conveying effect
c) so that the extruder has a backflow/leakage flow of the melt at least when the nozzle is closed,
d) an emerging melt strip or a melt thread or a melt strand or a melting point being produced.

2. 3D printing according to claim 1,**characterized by** the use of an extruder comprising a central spindle (17)having a tip (26, 35, 45, 55, 57) at the extruder outlet, a closable nozzle being arranged downstream of the outlet opening in the flow direction of the melt,
the nozzle being closed or opened by a displacement of the central spindle (17) and/or by a movement of the nozzle and/or by a slider or hollow casing portion,
even more preferably a nozzle being used which is movable in the axial direction of the central spindle (17) against the tip (26, 35, 45, 55, 57) of the central spindle in order to completely or partially close the nozzle, and being movable away from the tip (26, 35, 45, 55, 57) of the central spindle (17) in order to completely or partially open the nozzle.

3. 3D printing according to claim 1 or 2,**characterized by** the production of moulded parts by laying the melt strands/threads/strips in layers,
the laying of a melt strand/thread/strip within a layer being interrupted when the melt strand/thread/strip abuts against a melt strand/thread/strip that has already been laid, or being continued at a point where no melt strand has yet been laid,
preferably within the layers laying taking place line by line, the process being reversed when a moulded part edge is reached,
and/or the laying of the melt strand/thread/strip at the transition to an adjacent row of a layer being carried out without interruption, resulting in a meandering course of the melt strand/thread/strip
and/or the melt strands/threads/strip being laid at abutment points with other melt strands/threads/strips in the bond
and/or the melt strands/melt strips/threads having an offset from adjacent melt strands/melt strips/threads of at least 1 mm, preferably at least 2 mm, even more preferably of at least 3 mm and at most 4 mm.

## Revendications

1. Impression 3Davec une matière plastique fondue pour la fabrication d'une pièce moulée en utilisant une extrudeuse etapplication de la matière plastique liquide par l'intermédiaire d'une buse refermable, dans laquellela matière plastiqueest mélangée à des additifs, des agrégats et des charges,
dans laquellela masse fondue est réalisée par liquéfaction de la matière plastiquedans l'extrudeuse,
**caractérisée par**
a) l'utilisation d'uneextrudeuse à vis planétaires,
b) dans laquellel'extrudeuse à vis planétairesprésente uneffet de transport réduit
c) de telle sorte que l'extrudeusecomporte un écoulement de retour/fuite de la masse fondue au moins lorsque la buse est fermée,
d)dans laquelleune bande de fusion ou un fil de fusionou une gaine de fusion ou un point de fusion est produit(e) en sortie.

2. Impression 3Dselon la revendication 1, caractérisée parl'utilisation d'uneextrudeusecomprenant une broche centrale(17) avec une pointe (26, 35, 45, 55, 57)au niveau de la sortie d'extrudeuse, dans laquelleune buse refermableest disposée en aval de l'ouverture de sortie dans la direction d'écoulement de la masse fondue,
dans laquellela buse est fermée ou ouverte par un déplacement de la broche centrale (17)et/oupar un mouvement de la buseet/ou à l'aide d'uncoulisseau ou d'une section de revêtement creuse,
dans laquelleon utilise encore plus préférablement une busequi peut être déplacée dans la direction axiale de labroche centrale (17) contre la pointe (26, 35, 45, 55, 57) de labroche centrale (17) afin de refermer la buse en partie ou en totalité et qui peut être éloignée à partir de la pointe (26, 35, 45, 55, 57) de labroche centrale (17) afin d'ouvrir la buse en partie ou en totalité.

3. Impression 3Dselon la revendication lou2, **caractérisée par** la fabrication de pièces moulées en déposantpar couches ou par des épaisseurs desgaines/fils/bandes de fusion,
dans laquellela déposed'un(e)gaine/fil/bande de fusionà l'intérieur d'une couche est interrompue lorsquela gaine/fil/bande de fusionbute contre un(e) gaine/fil/bande de fusiondéjà posé(e), respectivement est avancé(e) vers un emplacement où il n'y a pas encore de gaine de fusion déposée,
dans laquellede préférence la pose se fait par lignes à l'intérieur des couches/épaisseurs, un renversement étant réalisé lorsque le bord d'une pièce moulée est atteint,
et/oula pose de la gaine/fil/bande de fusionest réalisée sans interruption lors d'un passage dans une ligne adjacente d'une couche/épaisseur et on obtient un tracé sinueuxde lagaine/fil/bande de fusion,
et/oulesgaines/fils/bandes de fusionsont posées de manière conjointe dans des positions en butée avec d'autresgaines/fils/bandes de fusion,
et/oulesgaines/bandes/fils de fusionprésentent undécalage par rapport auxgaines/bandes/fils de fusionadjacentes d'au moins 1 mm, de préférence d'au moins 2 mm, encore plus préférablement d'au moins 3 mm et au maximum de 4 mm.
